# EUROPEAN PATENT SPECIFICATION

(11) **EP 4 057 542 B1**
(45) Date of publication and mention of the grant of the patent: **06.08.2025**
(21) Application number: 20885056.0
(22) Date of filing: 25.09.2020
(51) Int. Cl.: H04B 7/026, H04W 84/06, H04W 88/04, H04L 1/08, H04W 36/08, H04W 36/36

(54) **COOPERATIVE TRANSMISSION BETWEEN A TERMINAL AND A BASE STATION USING ANOTHER TERMINAL**
KOOPERATIVE ÜBERTRAGUNG ZWISCHEN EINEM ENDGERÄT UND EINER BASISSTATION MIT EINEM ANDEREN ENDGERÄT
TRANSMISSION COOPÉRATIVE ENTRE UN TERMINAL ET UNE STATION DE BASE UTILISANT UN AUTRE TERMINAL

(30) Priority: 07.11.2019 JP 2019202786
(43) Date of publication of application: 14.09.2022
(73) Proprietor: Sony Group Corporation, Tokyo 108-0075 (JP)
(72) Inventor: MATSUDA, Hiroki, Tokyo 108-0075 (JP)
(74) Representative: Witte, Weller & Partner Patentanwälte mbB
(86) International application number: PCT/JP2020/036163
(87) International publication number: WO 2021/090596

(56) References cited:
- JP-A- 2011 509 052
- JP-A- 2013 511 933
- US-A1- 2012 231 739
- US-A1- 2019 020 381
- US-A1- 2019 238 213

## Description

### Field

An embodiment of the present invention relates to a terminal device and a control method thereof.

### Background

Radio access schemes and wireless networks of cellular mobile communication (hereinafter also referred to as Long Term Evolution (LTE), LTE-Advanced (LTE-A), LTE-Advanced Pro (LTE-A Pro), New Radio (NR), New Radio Access Technology (NRAT), Evolved Universal Terrestrial Radio Access (EUTRA), or Further EUTRA (FEUTRA)) are under review in 3rd Generation Partnership Project (3GPP).

NR is a different Radio Access Technology (RAT) from LTE as a radio access scheme of the next generation of LTE. NR is an access technology capable of handling various use cases including Enhanced Mobile broadband (eMBB), Massive Machine Type Communications (mMTC), and ultra reliable and Low Latency Communications (URLLC). NR is reviewed for the purpose of a technology framework corresponding to use scenarios, request conditions, placement scenarios, and the like in such use cases.

Furthermore, in the NR, study on a non-terrestrial network (NTN) in which a wireless network is provided from devices floating in the air or in space has been started in response to increase in demands for wide area coverage, connection stability, or the like. In the non-terrestrial network, a wireless network is provided to terminal devices via satellite stations and aircrafts. Further, in a non-terrestrial network, use of the same wireless access scheme as a radio access scheme in a terrestrial network facilitates integrated operation between the terrestrial network and the non-terrestrial network. A low-earth orbit satellite, a medium-earth orbit satellite, or the like, in the non-terrestrial network are moving at high speed over the sky, so that handover may frequently occur. Thus, in the non-terrestrial network, handover may occur during repeated transmission of data. Non Patent Literature 1 discloses a technique related to handover in the non-terrestrial network.

### Citation List

### Non Patent Literature

Non Patent Literature 1: R2-1910452, Intel Corporation, "Conditional Handover for Non-Terrestrial Networks," 3GPP TSG RAN2 Meeting#107, Prague, Czech Republic, August, 2019.

### Patent Literature

Patent Literature 1: US 2019/0238213 A1
Patent Literature 2: US 2012/0231739 A1
Patent Literature 3: US 2019/0020381 A1

### Summary

### Technical Problem

Here, among non-terrestrial stations, non-terrestrial stations such as a medium-earth orbit satellite, a low-earth orbit satellite, and a high altitude platform station (HAPS) appear to move at high speed in the sky when viewed from a terminal on the ground. In particular, the low-earth orbit satellite moves at high speed over the sky, and a cell formed by the low-earth orbit satellite on the ground also moves at high speed. Thus, due to high-speed movement of the cell, cell switching (handover) may occur during data transmission/reception, which may lead to a failure in data transmission/reception.

Thus, an object of the present disclosure is to provide a terminal device, a base station device, a control method of the terminal device, and a control method of the base station device, which can reduce failures in data transmission/reception due to occurrence of handover. Solution to Problem

According to an aspect of the present disclosure there is provided a terminal apparatus according to claim 1 and a corresponding control method according to claim 15.

### Brief Description of Drawings

FIG. 1 is a diagram illustrating a configuration example of a communication system according to an embodiment of the present disclosure.
FIG. 2 is a view illustrating an example of a wireless network provided by the communication system.
FIG. 3 is a view illustrating an overview of satellite communication provided by the communication system.
FIG. 4 is a view illustrating an example of a cell constituted by satellite station.
FIG. 5 is a diagram illustrating a configuration example of a management device according to the embodiment of the present disclosure.
FIG. 6 is a diagram illustrating a configuration example of a non-terrestrial station according to the embodiment of the present disclosure.
FIG. 7 is a diagram illustrating a configuration example of a terminal device according to an embodiment of the present disclosure.
FIG. 8 is a flowchart illustrating an example of an initial connection process.
FIG. 9 is a sequence diagram illustrating processing of the terminal device and the base station device before and after handover that occurs during data transmission.
FIG. 10 is a view illustrating a case where a plurality of terminal devices cooperatively transmits data.
FIG. 11 is a view illustrating a case where a plurality of terminal devices cooperatively transmits data.
FIG. 12 is a view illustrating a case where a plurality of terminal devices cooperatively receives data.
FIG. 13 is a flowchart illustrating procedure of processing to be executed by the terminal device according to the embodiment.

### Description of Embodiments

Embodiments of the present disclosure will be described below in detail with reference to the drawings. In each of the following embodiments, the same parts are denoted by the same reference symbols, and a repetitive description thereof will be omitted.

Further, in the present specification and the drawings, a plurality of components having substantially the same functional configuration is distinguished by attaching different numbers after the same reference numeral in some cases. In one example, a plurality of components having substantially the same functional configuration is distinguished, like terminal devices 50₁, 50₂, and 50₃, as necessary. Unless, however, it is necessary to particularly distinguish each of the plurality of components having substantially the same functional configuration, it is only to attach the same reference numeral. In one example, terminal devices 50₁, 50₂, and 50₃ are simply referred to as terminal devices 50 unless it is not particularly necessary to distinguish them.

Further, the present disclosure will be described in accordance with the order of items indicated below.
1. Introduction
2. Embodiment
2-1. Overall configuration of communication system
2-2. Configuration of management device
2-3. Configuration of base station
2-4. Configuration of terminal device
2-5. Initial connection processing
2-6. Example of HARQ procedure
2-7. Outline of embodiment
2-8. Determination processing of cooperative terminals
2-9. Relationship between cooperative terminals
2-10. Transmission signal processing
2-11. Data
3. Modified example
4. Conclusion

### <1. Introduction>

Radio access technologies such as LTE and NR are considered by the 3GPP. LTE and NR are types of cellular communication technologies and enable mobile communication of terminal device by arranging a plurality of areas covered by a base station in a cell form. Moreover, the term of "LTE" as used herein includes LTE-advanced (LTE-A), LTE-advanced pro (LTE-A Pro), and evolved-universal terrestrial radio access (EUTRA). In addition, the term of "NR" as used herein includes new radio access technology (NRAT) and further-EUTRA (FEUTRA).

NR is the next-generation (fifth generation) radio access technology (RAT) of LTE. NR is the radio access technology capable of supporting various use cases including enhanced mobile broadband (eMBB), massive machine-type communications (mMTC), and ultra reliable and URLLC. NR is no reviewed for the purpose of a technology framework corresponding to use scenarios, request conditions, placement scenarios, and the like in these use cases.

For example, studies on non-terrestrial network (NTN) have begun as one of the use cases for NR in demands for wide area coverage, connection stability, or the like. In the non-terrestrial network, the wireless network is planned to be provided for the terminal device via a base station other than a terrestrial station, such as satellite stations or aircraft stations. The base station other than the terrestrial stations is called a non-terrestrial station or a non-terrestrial base station. The wireless network provided by the terrestrial station is called a terrestrial network (TN). The use of the same radio access scheme for both terrestrial network and non-terrestrial network enables the integrated operations of the terrestrial network and the non-terrestrial network.

Moreover, in embodiments of the present disclosure, the terrestrial station (also referred to as a terrestrial base station) refers to a base station (including a relay station) installed on the ground. The term "ground" refers to not only the ground (land), but also the ground in the broad sense including underground, over-water, and under-water.

Further, in some embodiments, an application example to an NTN will be described as one of use cases of the NR. However, application of these embodiments is not limited to the NTN, and the embodiments may be applied to other technologies and use cases (e.g. URLLC).

### <2. Embodiment>

A communication system 1 according to the present embodiment is now described. The communication system 1 includes a non-terrestrial station and provides wireless communication using a non-terrestrial network for terminal devices. Further, the communication system 1 may provide wireless communication using a terrestrial network. Moreover, the non-terrestrial network and the terrestrial network provided in the communication system 1 are not limited to wireless networks using the radio access scheme specified by NR. The non-terrestrial network included in the communication system 1 may be wireless networks of the radio access scheme other than NR, such as LTE, wideband code division multiple access (W-CDMA), and code division multiple access 2000 (cdma2000).

Note that in the following description, concept of a base station (hereinafter, also referred to as a base station device) may include a relay station (hereinafter, also referred to as a relay device (relay node)) and a donor base station that provides a wireless interface to the relay station. In addition, the concept of the base station includes not only a structure equipped with functions of the base station but also a device installed in the structure. The structure is, in one example, buildings such as tower buildings, houses, steel towers, railway station facilities, airport facilities, harbor facilities, and stadiums. Moreover, the concept of a structure includes not only buildings but also non-building structures such as tunnels, bridges, dams, fences, and steel columns, or also includes facilities such as cranes, gates, and windmills. In addition, the concept of a structure includes not only structures on the ground (land) or structures under the ground but also structures on the water such as piers and mega-floats (very large floating structures) or structures underwater such as ocean observation facilities. Further, the base station may be constituted with an aggregate of a plurality of physical or logical devices. For example, in the embodiment of the present disclosure, a base station is classified into a plurality of devices of a baseband unit (BBU) and a radio unit (RU) and may be interpreted as an aggregate of these plurality of devices. In addition to or in place of this, in the embodiment of the present disclosure, the base station may be one or both of the BBU and the RU. The BBU and the RU may be connected with a predetermined interface (e.g. eCPRI). In addition to or in place of this, the RU may be referred to as a remote radio unit (RRU) or a radio DoT (RD). In addition to or in place of this, the RU may support gNB-DU, which will be described later. In addition to or in place of this, the BBU may support gNB-CU, which will be described later. In addition to or in place of this, the RU may be a device integrally formed with an antenna. An antenna of the base station (e.g. the antenna formed integrally with the RU) may adopt an advanced antenna system and support MIMO (e.g. FD-MIMO) and beamforming. In the advanced antenna system, the antenna of the base station (e.g. the antenna integrally formed with the RU) may include, for example, 64 transmission antenna ports and 64 reception antenna ports.

Further, the base station may be a base station configured to be movable. In one example, the base station may be a device installed in a moving body or the moving body itself. The moving body may be a mobile terminal such as smartphones, a moving body that moves on the ground (land) (e.g., a vehicle such as automobiles, buses, trucks, trains, and linear motor cars), or a moving body that moves under (e.g., in a tunnel) the ground (e.g., a subway). In addition, the moving body may be a moving object that moves on water (e.g., a ship such as passenger ships, cargo ships, and hovercrafts), or a moving body that moves underwater (e.g., a submersible ship such as submersible vessels, submarines, and unmanned submarines). In addition, the moving body may be a moving object that moves in the atmosphere (e.g., an aircraft such as airplanes, airships, and drones), or a space moving body that moves outside the atmosphere (e.g., artificial celestial bodies such as artificial satellites, spacecraft, space stations, and space probes).

A plurality of base stations may be connected to each other. One or more base stations may be included in a radio access network (RAN). In other words, the base station may be simply referred to as a RAN, a RAN node, an access network (AN), or an AN node. The RAN in the LTE is called an enhanced universal terrestrial RAN (EUTRAN). The RAN in the NR is called an NGRAN. The RAN in W-CDMA (UMTS) is called an UTRAN. An LTE base station is referred to as an evolved node B (eNodeB) or an eNB. In other words, the EUTRAN includes one or more eNodeBs (eNBs). Further, an NR base station is also referred to as a gNodeB or a gNB. In other words, the NGRAN contains one or more gNBs. In addition, the EUTRAN may include a gNB (en-gNB) connected to a core network (EPC) in an LTE communication system (EPS). Similarly, the NGRAN may include an ng-eNB connected to a core network 5GC in a 5G communication system (5GS). In addition to or in place of this, in a case where the base station is an eNB, a gNB, or the like, it may be referred to as 3GPP Access. In addition to or in place of this, in a case where the base station is a wireless access point (Access Point), it may be referred to as Non-3GPP Access. In addition to or in place of this, the base station may be an optical overhanging device called a remote radio head (RRH). In addition to or in place of this, in a case where the base station is a gNB, the base station may be referred to as a combination of the above-mentioned gNB central unit (CU) and gNB distributed unit (DU), or any one of them. The gNB central unit (CU) hosts a plurality of upper layers (e.g. RRC, SDAP, PDCP) among an access stratum for communication with the UE. On the other hand, the gNB-DU hosts a plurality of lower layers (e.g. RLC, MAC, PHY) among the access stratum. In other words, among messages or information which will be described later, RRC signalling (quasi-static notification) may be generated by the gNB CU, while DCI (dynamic notification) may be generated by the gNB-DU. Or instead, among RRC configurations (quasi-static notification), for example, some configurations such as IE: cell Group Config may be generated by the gNB-DU, and the remaining configurations may be generated by the gNB-CU. These configurations may be transmitted and received by an F1 interface which will be described later. The base station may be constituted so as to be able to communicate with other base stations. For example, in a case where a plurality of base station devices is an eNB or a combination of eNBs and en-gNBs, the base stations may be connected by an X2 interface. In addition to or in place of this, in a case where a plurality of base stations is a gNB or a combination of gn-eNBs and gNBs, the devices may be connected by an Xn interface. In addition to or in place of this, in a case where a plurality of base stations is a combination of gNB central units (CUs) and gNB distributed units (DUs), the devices may be connected by the F1 interface described above. The messages or the information (RRC signalling or DCI information) which will be described later may be communicated among a plurality of base stations (for example, via the X2, Xn, and F1 interfaces).

Further, in the LTE and the NR, a terminal device (also referred to as a mobile station, a mobile station device, or a terminal) may be referred to as user equipment (UE). In place of this, the terminal device may be called a mobile station (MS) or a wireless transmission reception unit (WTRU). Moreover, the terminal device is a type of wireless communication apparatus and is also referred to as a mobile station, mobile station equipment, or a terminal. In an embodiment of the present disclosure, the concept of a terminal device includes not only portable terminal device such as mobile terminal but also a device installed in, in one example, a structure or a moving body.

### <2-1. Overall configuration of communication system>

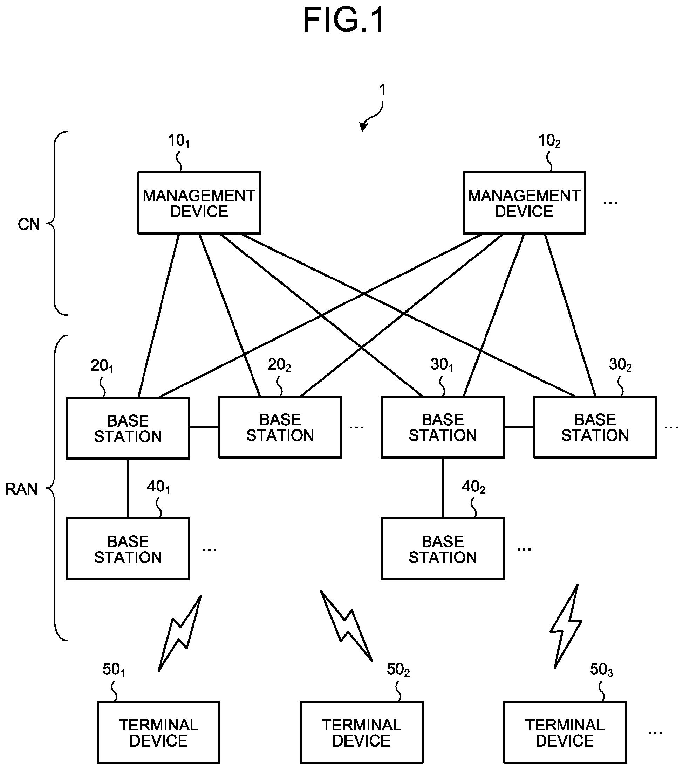

FIG. 1 is a diagram illustrating a configuration example of a communication system 1 according to an embodiment of the present disclosure. The communication system 1 includes a management device 10, a non-terrestrial base station (hereinafter, simply referred to as a base station) 20, a terrestrial base station (hereinafter, simply referred to as a base station) 30, a relay device (hereinafter, simply referred to as a base station) 40, and a terminal device 50. The communication system 1 provides a user with a wireless network that allows mobile communication, by operating each wireless communication apparatus constituting the communication system 1 in cooperation with each other. The wireless communication apparatus is a device having a wireless communication function and corresponds to the base stations 20, 30, and 40, and the terminal device 50 in the example of FIG. 1.

The communication system 1 may include a plurality of management devices 10, base stations 20, 30, 40, and terminal devices 50. In the example of FIG. 1, the communication system 1 includes management devices 10₁, 10₂, and the like, as the management device 10. Further, the communication system 1 includes base stations 20₁, 20₂, and the like, as the base station 20, and base stations 30₁ and 30₂, and the like, as the base station 30. Further, the communication system 1 includes base stations 40₁, 40₂, and the like, as the base station 40, and terminal devices 50₁, 50₂, 50₃, and the like, as the terminal device 50. As described above, application of the embodiment of the present disclosure is not limited to non-terrestrial communication (NTN). In other words, the communication system does not have to include a non-terrestrial station.

The management device 10 is a device that manages a wireless network. For example, the management device 10 is a device that functions as mobility management entity (MME) or an access and mobility management function (AMF). The MME is connected to the EUTRAN via the S1 interface and controls non-access stratum (NAS) signaling between the EUTRAN and the UE, and manages mobility of the UE. The AMF is connected to the NGRAN via an NG interface and controls non-access stratum (NAS) signaling between the NGRAN and the UE and manages mobility of the UE. The management device 10 may be included in the core network CN. The core network CN is, for example, an evolved packet core (EPC) or a 5G core network (5GC). The management device 10 is connected to each of the plurality of base stations 20 and the plurality of base stations 30. The management device 10 manages communication between the base station 20 and the base station 30. The core network transfers user data between a packet data network (PDN) or a data network (DN) and a RAN, as well as a control plane (C-Plane) node such as the management device 10.The core network may include a user plane (U-Plane) node. The U-Plane node in the EPC may include a serving gateway (S-GW) and a PDN-gateway (P-GW). The U-Plane node in 5GC may include a U-Plane function (UPF). For example, the management device 10 manages a position of the terminal device 50 (UE) in the communication system 1 for each terminal device 50 in unit of an area (e.g. a tracking area, a RAN notification area) including a plurality of cells. Note that the management device 10 may grasp and manage a base station (or a cell) to which the terminal device 50 is connected, a communication area of a base station (or a cell) in which the terminal device 50 exists, or the like, for each terminal device 50 in unit of a cell.

The base station 20 is a base station that wirelessly communicates with the terminal device 50. In the example of FIG. 1, the base station 20₁, which is connected to the base station 40₁, can also wirelessly communicate with the terminal device 50 via the base station 40₁. In the present embodiment, the base station 20 is a base station capable of floating in the air or in space. For example, the base station 20 is a non-terrestrial station device such as an aircraft station or a satellite station.

The aircraft station is a wireless communication apparatus capable of floating in the atmosphere, such as aircrafts, for example. The aircraft station may be a device mounted on an aircraft or the like or the aircraft itself, for example. Moreover, the concept of an aircraft includes not only heavy aircraft such as airplanes and gliders but also light aircraft such as balloons and airships. In addition, the concept of an aircraft includes not only heavy aircraft and light aircraft but also a rotorcraft such as helicopters and autogyros. Moreover, the aircraft station (or the aircraft on which the aircraft station is mounted) may be an unmanned aerial vehicle such as drones. Moreover, the concept of unmanned aerial vehicles also includes unmanned aircraft systems (UAS) and tethered unmanned aerial systems (tethered UAS). In addition, the concept of unmanned aerial vehicles includes lighter-than-air (LTA) UAS and heavier-than-air (HTA) UAS. In addition, the concept of unmanned aerial vehicles also includes high-altitude UAS platforms (HAPs). Further, in a case where the aircraft station functions as the UE, the aircraft station may be aerial UE.

The satellite station is a wireless communication apparatus capable of floating outside the atmosphere. The satellite station may be a device mounted on a space vehicle such as artificial satellites or the space vehicle itself. The satellite acting as the satellite station may be any of low earth orbit (LEO) satellites, medium earth orbiting (MEO) satellites, geostationary earth orbit (GEO) satellites, and highly elliptical orbit (HEO) satellites. The satellite station can understandably be a device mounted on the low-earth orbit satellite, medium-earth orbit satellite, geostationary earth orbit satellite, or highly elliptical orbit satellite.

The base station 30 is a base station that wirelessly communicates with the terminal device 50. In the example of FIG. 1, the base station 30₁, which is connected to the base station 40₂, can also wirelessly communicate with the terminal device 50 via the base station 40₂. The base station 30 may be a base station positioned on a structure on the ground or may be a base station provided on a mobile body moving on the ground. For example, the base station 30 is an antenna provided at a structure such as a building and a signal processing device connected to the antenna. Of course, the base station 30 may be a structure or a mobile body itself.

The base station 40 is a device that serves as a relay station for the base station. The base station 40 is a kind of base station. The base station 40 relays communication between the base station 20 and the terminal device 50 or communication between the base station 30 and the terminal device 50. The base station 40 may be a terrestrial station or a non-terrestrial station. The base station 40 may constitute a radio access network RAN together with the base station 20 and the base station 30. Note that in the following, the base stations 20, 30, and 40 may be collectively referred to as a base station or a base station device.

The terminal device 50 is, in one example, a mobile phone, a smart device (smartphone or tablet), a personal digital assistant (PDA), or a personal computer. In addition, the terminal device 50 may be a machine-to-machine (M2M) device or an Internet of things (IoT) device (for example, may referred to as MTC UE, NB-IoT UE, or Cat.M UE). In addition, the terminal device 50 may be a wireless communication apparatus installed in a moving body or the moving body itself. Moreover, the terminal device 50 may be relay station that relays satellite communication or the base station that receives satellite communication. The terminal device 50 is compatible with both the terrestrial network and the non-terrestrial network. Thus, the terminal device 50 is capable of communicating not only with terrestrial station device such as the base station 30 but also with non-terrestrial station device such as the base station 20.

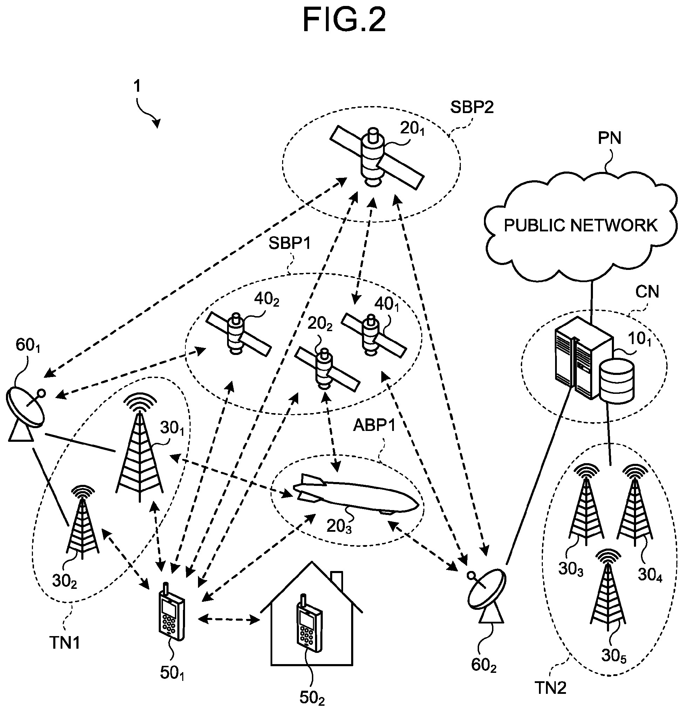

FIG. 2 is a view illustrating an example of a wireless network provided by the communication system 1. The base station 20 and the base station 30 respectively constitute cells. A cell is an area covered by the base station for wireless communication. The cells constituted by the base station 20 and the base station 30 may be any of macro cells, micro cells, femtocells, and small cells. The communication system 1 may be constituted so that a single base station manages a plurality of cells or a plurality of base stations manages one cell. The cell provided by the base station is called a serving cell. The serving cell includes a primary cell (PCell) and a secondary cell (SCell). In a case where dual connectivity (e.g. EUTRA-EUTRA dual connectivity, EUTRA-NR dual connectivity (ENDC), EUTRA-NR dual connectivity with 5GC, NR-EUTRA dual connectivity (NEDC), NR-NR dual connectivity) is provided to the UE (e.g. the terminal device 50), the PCell and zero or one or more SCell(s) provided by a master node (MN) are referred to as a master cell group. Further, the serving cell may include a primary secondary cell or a primary SCG cell (PSCell). In other words, in a case where dual connectivity is provided to the UE, the PSCell and zero or one or more SCell(s) provided by the secondary node (SN) are referred to as a secondary cell group (SCG). Unless specially configured (e.g. a PUCCH on SCell), a physical uplink control channel (PUCCH) is transmitted by the PCell and the PSCell, but is not transmitted by the SCell. A radio link failure is also detected in the PCell and the PSCell, but is not detected (does not have to be detected) in the SCell. The PCell and the PSCell have a special role in the serving cell(s) in this way, and thus, they are also called special cells (SpCell(s)). One downlink component carrier and one uplink component carrier may be associated with one cell. Further, a system bandwidth corresponding to one cell may be divided into a plurality of bandwidth parts. In this case, one or more bandwidth parts may be set for the UE, and one bandwidth part may be used by the UE as an active BWP. Further, radio resources (for example, a frequency band, numerology (subcarrier spacing), slot configuration) that can be used by the terminal device 50 may be different for each cell, each component carrier, or each BWP.

In the example of FIG. 2, the base stations 30₁ and 30₂ constitute a terrestrial network TN1, and the base stations 30₃, 30₄, and 30₅ constitute a terrestrial network TN2. The terrestrial network TN1 and the terrestrial network TN2 are, in one example, terrestrial networks operated by a mobile network operator (MNO) such as telephone companies. The terrestrial network TN1 and the terrestrial network TN2 may be operated by different mobile network operators (i.e., MNOs with different PLMN) or may be operated by the same mobile network operator. It is also possible to regard the terrestrial network TN1 and the terrestrial network TN2 as one terrestrial network.

The terrestrial network TN1 and the terrestrial network TN2 are connected individually to a core network. In the example of FIG. 2, the base station 30 configuring the terrestrial network TN2 is connected to the core network CN constituted by the management device 10₁ or the like. In the case where the radio access scheme of the terrestrial network TN2 is LTE, the core network CN is EPC. In addition, in the case where the radio access scheme of the terrestrial network TN2 is NR, the core network CN is 5GC. The core network CN is understandably not limited to EPC or 5GC and may be a core network using other radio access schemes. Moreover, the terrestrial network TN1 is not connected to the core network in the example of FIG. 2, but the terrestrial network TN1 may be connected to the core network CN. In addition, the terrestrial network TN1 may be connected to a core network (not illustrated) different from the core network CN.

The core network CN is provided with a gateway device, an inter-gateway switch, or the like and is connected to a public network PN via the gateway device. The public network PN is, in one example, a public data network such as the Internet, regional IP networks, and telephone networks (such as mobile phone networks and fixed-line phone networks). The gateway device is, in one example, a server device connected to the Internet, a regional IP network, or the like. The inter-gateway switch is, in one example, a telephone switch connected to a telephone network of a telephone company. The management device 10₁ can have a function as a gateway device or an inter-gateway switch.

The base station 20 and the base station 40 illustrated in FIG. 2 are both non-terrestrial station device such as satellite station and aircraft station. The group of satellite station (or single satellite station) that constitutes the non-terrestrial network is called a space-borne platform. In addition, the group of aircraft station (or single aircraft station) that constitutes the non-terrestrial network is called an airborne platform. In the example of FIG. 2, the base station 20₂, the base station 40₁, and the base station 40₂ constitute a space-borne platform SBP1. The base station 20₁ constitutes a space-borne platform SBP2. In addition, the base station 20₃ constitutes an airborne platform ABP1.

The terminal device 50 can communicate with both the base station 30 and the base station 20. In the example of FIG. 2, the terminal device 50₁ is capable of communicating with the base station 30 that constitutes the terrestrial network TN1. In addition, the terminal device 50₁ is capable of communicating with the base station 20 that constitutes the space-borne platforms SBP1 and SBP2. In addition, the terminal device 50₁ is also capable of communicating with the base station 20 that constitutes the airborne platform ABP1. Moreover, the terminal device 50₁ may be capable of directly communicating with other terminal device 50 (the terminal device 50₂ in the example of FIG. 2).

The base station 20 is connected to the terrestrial network or the core network via a relay station 60. The base station 20, which constitutes the space-borne platforms SBP1 and SBP2, is connected to the terrestrial network TN1 via the relay station 60₁. In addition, the base station 20, which constitutes the space-borne platforms SBP1, SBP2 and the airborne platform ABP1, is connected to the core network CN via a relay station 60₂. Moreover, it is also possible for the base stations 20 to communicate directly with each other among the base stations 20 without via the relay station 60.

The relay station 60 is, in one example, an aircraft station or an earth station. An aircraft station is a radio station installed on the ground or on a moving body that moves on the ground to communicate with an aircraft station. In addition, the earth station is a radio station located on the earth (including the air) to communicate with a satellite station (a space station). The earth station may be a large earth station or a small earth station such as a very-small-aperture terminal (VSAT). Moreover, the earth station may be a VSAT control earth station (also referred to as a master station or HUB station) or a VSAT earth station (also referred to as a slave station). In addition, the earth station may be a radio station installed in a moving body that moves on the ground. In one example, an example of the earth station mounted on a ship includes earth stations on board vessels (ESV). In addition, the earth station can include an aircraft earth station, which is installed in an aircraft (including helicopters) and communicates with a satellite station. In addition, the earth station can include an aviation earth station, which is installed in a moving body that moves on the ground and communicates with an aircraft earth station via a satellite station. Moreover, the relay station 60 may be a portable mobile station that communicates with a satellite station or an aircraft station. The relay station 60 may be considered as a part of the communication system 1.

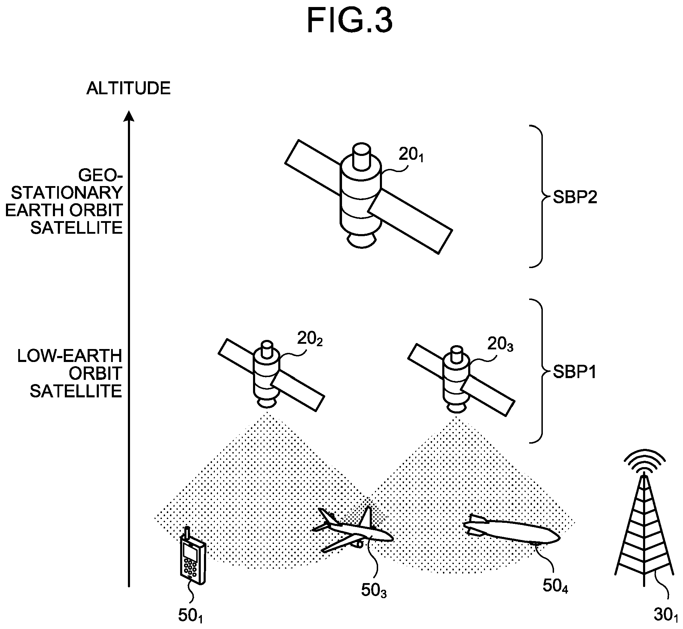

Each apparatus that constitutes the space-borne platforms SBP1 and SBP2 performs satellite communication with the terminal device 50. The satellite communication refers to wireless communication between the satellite station and the terminal device 50. FIG. 3 is a view illustrating an overview of satellite communication provided by the communication system 1. The satellite station is mainly divided into geostationary earth orbit satellite station and low-earth orbit satellite station.

The geostationary earth orbit satellite station is located at an altitude of approximately 35,786 km and revolves around the earth at the same speed as the earth's rotation. In the example of FIG. 3, the base station 20₁ that constitutes the space-borne platform SBP2 is the geostationary earth orbit satellite station. The geostationary earth orbit satellite station has a relative velocity of approximately zero with the terminal device 50 and appears stationary when observing from the terminal device 50 on the ground. The base station 20₁ performs satellite communication with the terminal devices 50₁, 50₃, 50₄, and the like located on the earth.

The low-earth orbit satellite station is the satellite station that orbits at a lower altitude than geostationary earth orbit satellite station and medium-earth orbit satellite station. The low-earth orbit satellite station is, in one example, the satellite station located between altitudes of 500 km and 2000 km. In the example of FIG. 3, the base stations 20₂ and 20₃ that constitute the space-borne platform SBP1 are the low-earth orbit satellite station. Moreover, FIG. 3 illustrates only two base stations 20₂ and 20₃ as satellite station that constitutes the space-borne platform SBP1. The satellite station that constitutes the space-borne platform SBP1, however, has two or more (e.g., tens to thousands) base stations 20, which practically constitute a low-earth orbit satellite constellation. The low-earth orbit satellite station has a relative speed with respect to the terminal device 50 on the ground unlike the geostationary earth orbit satellite station and appears to be moving when observing from the terminal device 50 on the ground. The base stations 20₂ and 20₃ constitute individually a cell and perform satellite communication with the terminal devices 50₁, 50₂, 50₃, and the like located on the earth.

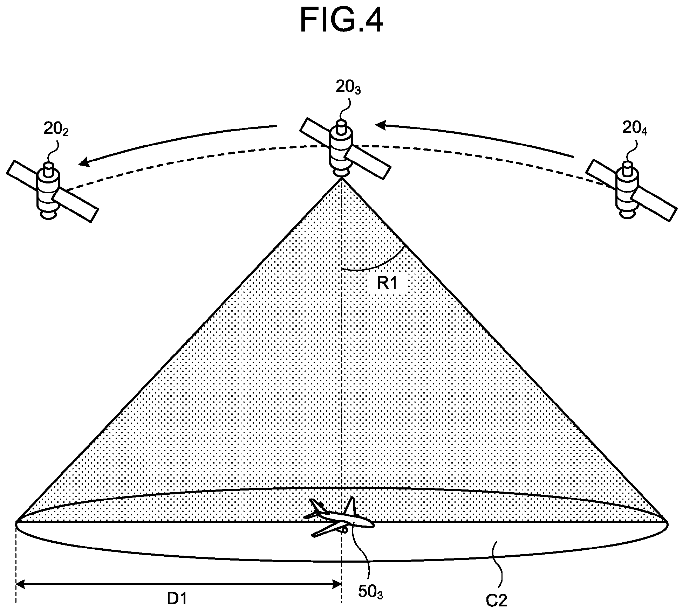

FIG. 4 is a view illustrating an example of a cell constituted by the satellite station. FIG. 4 illustrates a cell C2 constituted by the base station 20₃, which is the low-earth orbit satellite station. The satellite station that orbits a low earth orbit communicates with the terminal device 50 with a predetermined directivity on the ground. In one example, the angle R1 illustrated in FIG. 4 is 40 degrees. In the case of FIG. 4, the radius D1 of the cell C2 constituted by the base station 20₃ is, in one example, 1000 km. The low-earth orbit satellite station moves at a constant speed. In the case where the low-earth orbit satellite station is difficult to provide satellite communication to the terminal device 50, the subsequent low-earth orbit satellite station provides satellite communication. In the case of the example in FIG. 4, in the case where the base station 20₃ is difficult to provide satellite communication to the terminal device 50, the subsequent base station 20₄ provides satellite communication. Moreover, the values of the angle R1 and the radius D1 mentioned above are merely an example and are not limited thereto.

As described above, the terminal device 50 is capable of performing wireless communication using a non-terrestrial network. In addition, the base station 20 and the base station 40 in the communication system 1 constitute the non-terrestrial network. This makes it possible for the communication system 1 to extend the service even to the terminal device 50 located in the area that is incapable of covering by the terrestrial network. In one example, the communication system 1 is capable of providing public safety and critical communications for the terminal device 50, such as Internet of things (IoT) devices and machine-type communications (MTC) devices. In addition, the use of the non-terrestrial network improves service reliability and recovery, so the communication system 1 is capable of reducing the vulnerability of the service to the physical attack or the natural disaster. In addition, the communication system 1 is capable of implementing service connection to aircraft terminal equipment such as passengers of airplanes and drones and service connection to moving body terminal equipment such as ships and trains. In addition, the communication system 1 is capable of implementing the A/V content services, group communications, IoT-based broadcast services, software download services, high-performance multicast services such as emergency messages, high-performance broadcast service, and the like. Furthermore, the communication system 1 is capable of supporting traffic offload between the terrestrial network and the non-terrestrial network. For the implementation described above, the non-terrestrial network provided by the communication system 1 makes preferably operational integration with the terrestrial network provided by the communication system 1 in the upper layer, but is not limited to this. In addition, the non-terrestrial network provided by the communication system 1 has preferably a common radio access scheme with the terrestrial network provided by the communication system 1, but is not limited to this.

Next, the configuration of each device that constitutes the communication system 1 according to the present embodiment is now described in detail.

### <2-2. Configuration of management device>

The management device 10 is a device that manages a wireless network. For example, the management device 10 is a device to manage communication between the base station 20 and the base station 30. If the core network is EPC, the management device 10 is, in one example, a device having a function as a mobility management entity (MME). In addition, if the core network is 5GC, the management device 10 is, in one example, a device having a function as an access and mobility management function (AMF). Moreover, the management device 10 can have a function of a gateway. In one example, if the core network is EPC, the management device 10 can function as a serving-gateway (S-GW) or a packet data network gateway (P-GW). In addition, if the core network is 5GC, the management device 10 can have a function as a user plane function (UPF). Moreover, the management device 10 is not necessarily a device that constitutes the core network. In one example, if the core network is a W-CDMA or cdma2000 based core network, the management device 10 may be a device that functions as a radio network controller (RNC).

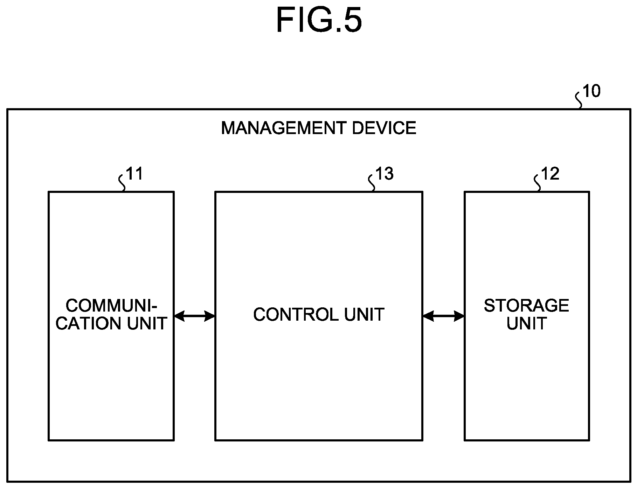

FIG. 5 is a diagram illustrating a configuration example of the management device 10 according to the embodiment of the present disclosure. The management device 10 includes a communication unit 11, a storage unit 12, and a control unit 13. Moreover, the configuration illustrated in FIG. 5 is a functional configuration and its hardware configuration may be different from that illustrated. In addition, the functions of the management device 10 may be implemented in the form distributed in a plurality of physically separated components. In one example, the management device 10 may be constituted by a plurality of server devices.

The communication unit 11 is a communication interface for communicating with other apparatuses. The communication unit 11 may be a network interface or a device connection interface. In one example, the communication unit 11 may be a local area network (LAN) interface such as a network interface card (NIC) or may be a universal serial bus (USB) interface including a USB host controller, a USB port, and the like. In addition, the communication unit 11 may be a wired interface or a wireless interface. The communication unit 11 functions as a communication means of the management device 10. The communication unit 11 communicates with the base station 30 or the relay station 60 under the control of the control unit 13.

The storage unit 12 is a data readable/writable storage device, such as dynamic random access memory (DRAM), static random access memory (SRAM), flash memory, and hard disk. The storage unit 12 functions as a storage means of the management device 10. The storage unit 12 stores, in one example, the connection state of the terminal device 50. In one example, the storage unit 12 stores the radio resource control (RRC) state and the EPS connection management (ECM) state of the terminal device 50. The storage unit 12 can function as a home memory that stores the position information of the terminal device 50.

The control unit 13 is a controller that controls each component of the management device 10. The control unit 13 is configured by including a processor such as central processing units (CPUs) and micro-processing units (MPUs). In one example, the control unit 13 performs its function by the processor executing various programs stored in the storage device inside the management device 10 using a random access memory (RAM) or the like as a work area. Moreover, the control unit 13 may be configured as an integrated circuit such as application-specific integrated circuits (ASICs) and field-programmable gate arrays (FPGAs). Each of CPU, MPU, ASIC, and FPGA may be regarded as a controller.

### <2-3. Configuration of base station>

Next, a configuration of the base station will be described. The communication system 1 includes a base station 20, a base station 30, and a base station 40 as base stations. All the base stations 20 to 40 may be movable. A configuration of the base station 20 will be described below as the configuration of the base station. Configurations of the base station 30 and the base station 40 may be the same as the configuration of the base station 20 which will be described below.

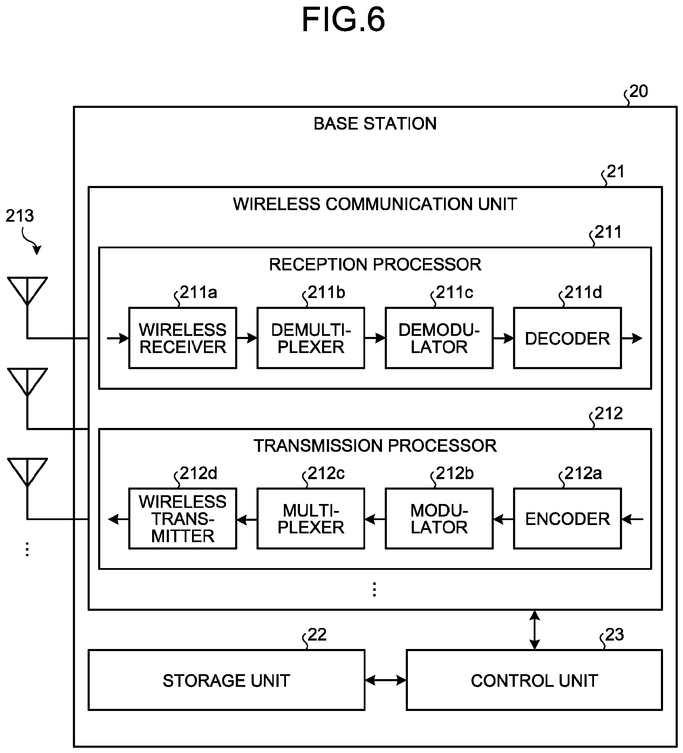

FIG. 6 is a diagram illustrating a configuration example of a base station 20 according to the embodiment of the present disclosure. The base station 20 includes a wireless communication unit 21, a storage unit 22, and a control unit 23. Moreover, the configuration illustrated in FIG. 6 is a functional configuration and its hardware configuration may be different from that illustrated. Further, functions of the base station 20 may be distributed in a plurality of physically separated components and implemented.

The wireless communication unit 21 is a wireless communication interface that wirelessly communicates with other wireless terminal devices (e.g., the terminal device 50 or the relay station 60). The wireless communication unit 21 supports one or a plurality of radio access schemes. In one example, the wireless communication unit 21 supports both NR and LTE. The wireless communication unit 21 can support W-CDMA or cdma2000 in addition to NR and LTE. The wireless communication unit 21 includes a reception processor 211, a transmission processor 212, and an antenna 213. The wireless communication unit 21 can include a plurality of reception processors 211, transmission processors 212, and antennas 213. Moreover, in the case where the wireless communication unit 21 supports a plurality of radio access schemes, each component of the wireless communication unit 21 may be configured to support individually for each radio access scheme. In one example, the reception processor 211 and the transmission processor 212 may be configured to support individually for LTE and NR.

The reception processor 211 processes an uplink signal received via the antenna 213. The reception processor 211 includes a wireless receiver 211a, a demultiplexer 211b, a demodulator 211c, and a decoder 211d.

The wireless receiver 211a down-converts an uplink signal, removes an unnecessary frequency component, controls an amplification level, performs orthogonal demodulation, performs conversion to a digital signal, removes a guard interval, extracts a frequency domain signal using fast Fourier transform, or the like. The demultiplexer 211b separates the signal output from the wireless receiver 211a into an uplink channel, such as physical uplink shared channel (PUSCH) or physical uplink control channel (PUCCH), and an uplink reference signal. The demodulator 211c demodulates the received signal using a modulation scheme such as binary phase-shift keying (BPSK) and quadrature phase-shift keying (QPSK) for the modulation symbol of the uplink channel. The modulation scheme used by the demodulator 211c may be 16-quadrature amplitude modulation (QAM), 64QAM, or 256QAM. The decoder 211d performs decoding processing on the demodulated coded bits of the uplink channel. The decoded uplink data and uplink control information are output to the control unit 23.

The transmission processor 212 performs transmission processing of downlink control information and downlink data. The transmission processor 212 includes an encoder 212a, a modulator 212b, a multiplexer 212c, and a wireless transmitter 212d.

The encoder 212a encodes the downlink control information and downlink data input from the control unit 23 using an encoding scheme such as block encoding, convolutional encoding, and turbo encoding. The modulator 212b modulates the coded bits output from the encoder 212a using a predetermined modulation scheme such as BPSK, QPSK, 16QAM, 64QAM, and 256QAM. The multiplexer 212c multiplexes the modulation symbol of each channel and the downlink reference signal and arranges the result in a predetermined resource element. The wireless transmitter 212d performs various types of signal processing on the signal from the multiplexer 212c. In one example, the wireless transmitter 212d performs conversion into the time domain by fast Fourier transform, addition of a guard interval, generation of a baseband digital signal, conversion into an analog signal, quadrature modulation, up-conversion, removal of extra frequency components, and processing of power amplification or the like. The signal generated by the transmission processor 212 is transmitted through the antenna 213.

The storage unit 22 is a data readable/writable storage device such as DRAM, SRAM, flash memory, and hard disk. The storage unit 22 functions as a storage means of the base station 20. The storage unit 22 stores the switching information. The switching information is the information used by the terminal device 50 to switch the base station. The switching information includes, in one example, information such as resource information, trigger information, timing advance information, and the like.

The resource information is the information relating to the radio resource used by the connected terminal device 50 to perform wireless communication with the base station as a switching destination candidate configured to be movable. In addition, the trigger information is the information used by the terminal device 50 to determine whether or not to switch the base station as a connection destination. In addition, the timing advance information is the information relating to timing advance for the terminal device 50 to connect to the base station as a switching destination candidate. The resource information, trigger information, and timing advance information are described in detail later.

The control unit 23 is a controller that controls each component of the base station 20. The control unit 23 is configured by including a processor such as central processing units (CPUs) and micro-processing units (MPUs). In one example, the control unit 23 performs its function by the processor executing various programs stored in the storage device inside the base station 20 using a random access memory (RAM) or the like as a work area. Moreover, the control unit 23 may be configured as an integrated circuit such as application-specific integrated circuits (ASICs) and field-programmable gate arrays (FPGAs). Each of CPU, MPU, ASIC, and FPGA may be regarded as a controller.

### <2-4. Configuration of terminal device>

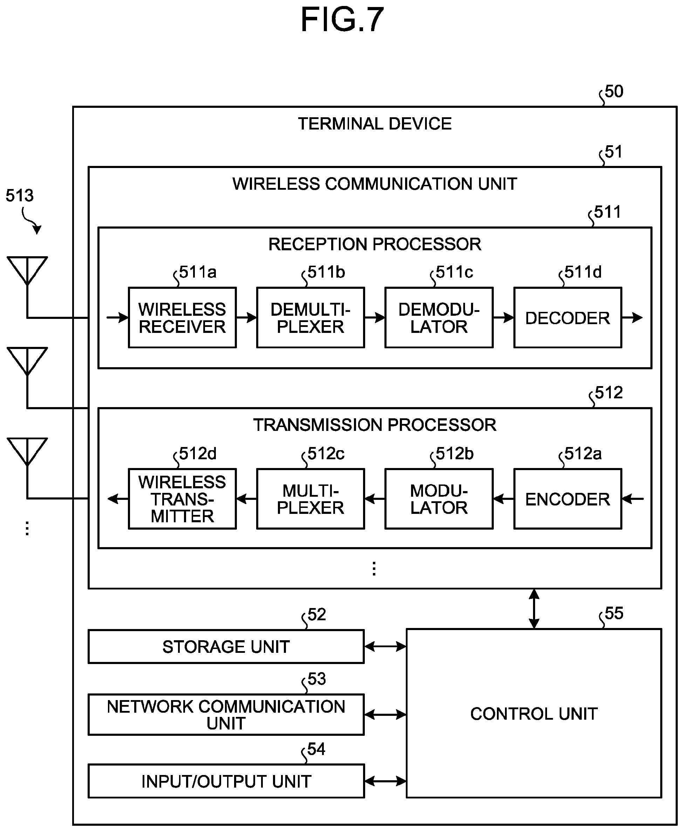

Next, a configuration of the terminal device 50 will be described. FIG. 7 is a diagram illustrating a configuration example of the terminal device 50 according to an embodiment of the present disclosure. The terminal device 50 includes a wireless communication unit 51, a storage unit 52, a network communication unit 53, an input/output unit 54, and a control unit 55. Moreover, the configuration illustrated in FIG. 7 is a functional configuration and its hardware configuration may be different from that illustrated. Further, functions of the terminal device 50 may be distributed in a plurality of physically separated components and implemented. Further, the configuration illustrated in FIG. 7 is an example, and not all of the wireless communication unit 51, the storage unit 52, the network communication unit 53, the input/output unit 54, and the control unit 55 are essential components. For example, from the viewpoint of the embodiment of the present disclosure, at least the network communication unit 53 and the input/output unit 54 do not necessarily have to be essential components.

The wireless communication unit 51 is a wireless communication interface that wirelessly communicates with other wireless communication apparatus (e.g., the base stations 20, 30, and 40). The wireless communication unit 51 supports one or a plurality of radio access schemes. In one example, the wireless communication unit 51 supports both NR and LTE. The wireless communication unit 51 can support W-CDMA or cdma2000 in addition to NR and LTE. The wireless communication unit 51 includes a reception processor 511, a transmission processor 512, and an antenna 513. The wireless communication unit 51 can include a plurality of reception processors 511, transmission processors 512, and antennas 513. Moreover, in the case where the wireless communication unit 51 supports a plurality of radio access schemes, each component of the wireless communication unit 51 may be configured to support individually for each radio access scheme. In one example, the reception processor 511 and the transmission processor 512 may be configured to support individually for LTE and NR.

The reception processor 511 processes a downlink signal received via the antenna 513. The reception processor 511 includes a wireless receiver 511a, a demultiplexer 511b, a demodulator 511c, and a decoder 511d.

The wireless receiver 511a down-converts a downlink signal, removes an unnecessary frequency component, controls an amplification level, performs orthogonal demodulation, performs conversion to a digital signal, removes a guard interval, extracts a frequency domain signal using fast Fourier transform, or the like. The demultiplexer 511b separates the signal output from the wireless receiver 511a into a downlink channel, a downlink synchronization signal, and a downlink reference signal. The downlink channel is a channel such as physical broadcast channel (PBCH), physical downlink shared channel (PDSCH), and physical downlink control channel (PDCCH). The demodulator 211c demodulates the received signal for a modulation signal of the downlink channel using a modulation scheme such as BPSK, QPSK, 16QAM, 64QAM, and 256QAM. The decoder 511d performs decoding processing on the demodulated coded bits of the downlink channel. The decoded downlink data and downlink control information are output to the control unit 23.

The transmission processor 512 performs transmission processing of uplink control information and uplink data. The transmission processor 512 includes an encoder 512a, a modulator 512b, a multiplexer 512c, and a wireless transmitter 512d.

The encoder 512a encodes the uplink control information and uplink data input from the control unit 55 using an encoding scheme such as block encoding, convolutional encoding, and turbo encoding. The modulator 512b modulates the coded bits output from the encoder 512a using a predetermined modulation scheme such as BPSK, QPSK, 16QAM, 64QAM, and 256QAM. The multiplexer 512c multiplexes the modulation symbol of each channel and the uplink reference signal and arranges the result in a predetermined resource element. The wireless transmitter 512d performs various types of signal processing on the signal from the multiplexer 512c. In one example, the wireless transmitter 512d performs conversion into the time domain by inverse fast Fourier transform, addition of a guard interval, generation of a baseband digital signal, conversion into an analog signal, quadrature modulation, up-conversion, removal of extra frequency components, and processing of power amplification or the like. The signal generated by the transmission processor 512 is transmitted through the antenna 513.

The storage unit 52 is a data readable/writable storage device such as DRAM, SRAM, flash memory, and hard disk. The storage unit 52 functions as a storage means of the terminal device 50. The storage unit 52 stores the switching information. The switching information is the information acquired from the base stations 20, 30, or 40, and is used by the terminal device 50 for switching the base station. The switching information includes, in one example, information such as resource information, trigger information, timing advance information, and the like. The resource information, trigger information, and timing advance information are described in detail later.

The network communication unit 53 is a communication interface for communicating with other apparatuses. In one example, the network communication unit 53 is a LAN interface such as NIC. The network communication unit 53 may be a wired interface or a wireless interface. The network communication unit 53 functions as a network communication means of the terminal device 50. The network communication unit 53 communicates with other devices under the control of the control unit 55.

The input/output unit 54 is a user interface for exchanging information with the user. In one example, the input/output unit 54 is an operation device, such as keyboards, mice, operation keys, and touch panels, for the user to perform various operations. In addition, the input/output unit 54 is a display device such as a liquid crystal display (LCD) and an organic electroluminescence (EL) display. The input/output unit 54 may be an acoustic device such as loudspeakers and buzzers. In addition, the input/output unit 54 may be a lighting device such as a light-emitting diode (LED) lamp. The input/output unit 54 functions as an input/output means (input means, output means, operation means, or notification means) of the terminal device 50.

The control unit 55 is a controller that controls each component of the terminal device 50. The control unit 55 is configured by including a processor such as central processing units (CPUs) and micro-processing units (MPUs). In one example, the control unit 55 performs its function by the processor executing various programs stored in the storage device inside the terminal device 50 using a random access memory (RAM) or the like as a work area. Moreover, the control unit 55 may be configured as an integrated circuit such as ASICs and FPGAs. Each of CPU, MPU, ASIC, and FPGA may be regarded as a controller.

### <2-5. Initial connection processing>

Operation of the communication system 1 will be described next. First, initial connection processing will be described. Initial connection (initial access) is processing for transitioning from an idle state (RRC_IDLE) in which the UE (terminal device 50) has not established a connection with any RAN (the base station 20 and the base station 30) to a connection state (RRC_CONNECTED) in which the UE has established a connection with one of the RANs.

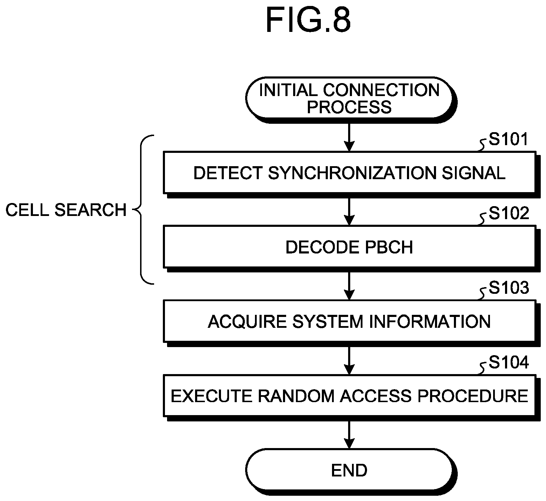

FIG. 8 is a flowchart illustrating an example of an initial connection process. An initial connection process will be described below with reference to FIG. **8****.** The initial connection process described below is executed, for example, when the UE (terminal device 50) is turned on.

First, the terminal device 50 in an idle state performs cell search. The cell search is procedure for the UE to detect a physical cell ID (PCI) of a cell and obtain time and frequency synchronization. The cell search of the present embodiment includes a step of detecting a synchronization signal and decoding a PBCH. The synchronization signal (SS) in the NR includes a primary synchronization signal (PSS) and a secondary synchronization signal (SSS). In the NR, a PSS, an SSS, and a PBCH are transmitted as one set. This set is called an SS/PBCH block (SSB). In addition, a plurality of SSBs is transmitted per unit time (e.g. half frame (5 ms)). A plurality of SSBs transmitted per half frame is called an SSB burst, an SS burst, an SSB burst set or an SS burst set. The SSB burst is transmitted periodically and repeatedly with the periodicity of the SSB burst. An index (SSB index) is assigned to each of the plurality of SSBs in one SSB burst. One SSB index is associated with, for example, one beam. Also, the number of a plurality of SSBs in one SSB burst depends on subcarrier spacing associated with a frequency band. The control unit 55 of the UE (terminal device 50) detects the SSB of the cell (step S101). More specifically, the UE detects the SSB corresponding to a beam with the highest quality in the SSB burst. The control unit 55 achieves synchronization with the cell in a downlink on the basis of the detected synchronization signal. Then, after synchronization in the downlink is achieved, the control unit 55 attempts to decode the PBCH and acquires a master information block (MIB) which is part of system information (step S102).

The system information is the information used to inform the configuration in a cell that transmits the system information. The system information includes, in one example, information (e.g., RACH-Config) relating to access to a cell (e.g. Random Access), information relating to cell selection, information relating to other RATs or other systems, and the like. The system information includes an MIB and a system information block (SIB). The MIB is the information of the physical layer necessary for receiving the SIB or the like and is the information of a fixed payload size informed over PBCH. The MIB includes downlink system bandwidth, part of the system frame number, SIB scheduling information, and the like. The SIB is system information other than MIB and is informed over PDSCH.

Moreover, it is possible to classify the system information into first system information, second system information, and third system information. The first system information and the second system information include information regarding access to a cell, information regarding acquisition of other system information, and information regarding cell selection. In LTE, the information included in the MIB is the first system information. In addition, the information included in SIB1 and SIB2 in the SIB is the second system information. The remaining system information is the third system information.

In NR, the system information is also informed from the NR cell. The physical channel that carries the system information may be transmitted in a slot or mini-slot. A mini-slot is defined by the number of symbols that is smaller than the number of symbols in the slot. The transmission of the physical channel carrying the system information in the mini-slot makes it possible to reduce the time taken for the beam sweeping, thereby reducing the overhead. For NR, the first system information is transmitted over NR-PBCH and the second system information is transmitted over a different physical channel than NR-PBCH.

The control unit 55 of the terminal device 50 acquires the second system information on the basis of the MIB (that is, the first system information) (step S103). As described above, the second system information is constituted with the SIB1 and the SIB2. The SIB1 is cell access regulation information and scheduling information of system information other than the SIB1. In a case of the NR, the SIB1 includes information relating to cell selection (for example, cellSelectionInfo), information relating to cell access (for example, cellAccessRelatedInfo), information relating to connection establishment failure control (for example, connEstFailureControl), scheduling information of the system information other than the SIB1 (for example, si-SchedulingInfo), settings of the serving cell, and the like. The settings of the serving cell include cell-specific parameters, downlink settings, uplink settings, TDD setting information, and the like. The uplink settings include RACH settings, and the like. In a case of the LTE, the SIB1 includes cell access information, cell selection information, maximum uplink transmission power information, TDD setting information, a cycle of the system information, mapping information of the system information, and a length of system information (SI) window length, and the like. Further, in a case of the NR, the SIB2 includes cell reselection information (for example, cellReselectionInfoCommon) and cell reselection serving frequency information (for example, cellReselectionServingFreqInfo). In a case of LTE, the SIB2 includes connection prohibition information, radio resource setting information common to cells (radioResourceConfigCommon), uplink carrier information, and the like. The radio resource setting information common to cells includes setting information on a physical random access channel (PRACH) and a random access channel (RACH), which is common to cells.

Moreover, in the case where the control unit 55 is incapable of acquiring the system information necessary for establishing the link, the control unit 55 of the terminal device 50 determines that access to the cell is barred. In one example, in the case where both the first system information and the second system information fail to be acquired, the control unit 55 determines that access to the cell is barred. In this case, the control unit 55 terminates the initial connection process.

In a case where the system information can be acquired, the control unit 55 executes random access procedure on the basis of the first system information and/or the second system information (step S104). The random access procedure is sometimes referred to as random access channel procedure (RACH procedure) or RA procedure. In the RACH procedure, the UE first transmits a random access preamble and then monitors a PDCCH of that cell for a random access response identified by RA-RNTI for a period indicated by the configured IE ra-response window. On the other hand, in a case where the transmitted preamble arrives at the RAN without collision, a random access response including a preamble identifier corresponding to PREAMBLE_INDEX which is an index of the transmitted preamble, is transmitted from the RAN to the UE. In a case where the UE receives the random access response including the preamble identifier corresponding to the transmitted PREAMBLE_INDEX while ra-response windo is running, the UE recognizes that the random access procedure has been successfully completed. Then, in a case where the UE transmits an RRCSetupRequest message in Msg3 and receives an RRCSetup message from the RAN in response to the RRCSetupRequest message, the UE (terminal device 50) transitions from the idle state (RRC_IDLE) to the connection state (RRC_CONNECTED) (puts into RRC Connected) and recognizes a current cell (the cell for which the RACH procedure and the RRC setup procedure have been performed) as a primary Cell.

### <2-6. Example of HARQ procedure>

Here, in communication processing (for example, the above-mentioned initial connection processing) by the control unit 55 of the terminal device 50 and the control unit (for example, the control unit 23) of the base station device (for example, the base station 20, the base station 30), Hybrid ARQ (HARQ) is used for error correction in data. For example, the HARQ is used for PDSCH data transmission, PUSCH data transmission, and PSSCH data transmission.

The HARQ is means for obtaining a coding gain by soft combining the initially transmitted data and the retransmitted data to perform error correction. In order to perform the HARQ, the base station device or the terminal device 50 holds data that has failed in decoding in a HARQ buffer, combines retransmitted data and the held data, and performs error correction. More specifically, one HARQ process may include the following operations. MAC entity in the UE (terminal device 50) determines whether the received data is newly transmitted data or retransmitted data from a new date indicator (NDI) in a DCI in which transmission resources of the data are scheduled. In a case where the received data is newly transmitted data, the MAC entity attempts to decode the received data. In a case where the received data is retransmitted data, and data in the transport block has not yet been successfully decoded, the MAC entity instructs the physical layer to combine data which currently exists in a soft buffer for the transport block with the received data and attempts to decode the combined data. In a case where the data attempted to be decoded by the MAC entity is successfully decoded, or in a case where the data has been previously successfully decoded, the decoded MAC PDU is carried to an upper layer or disassembly and demultiplexing entity. In a case where the data attempted to be decoded by the MAC entity is not successfully decoded, and in a case where the data has not been previously successfully decoded, the MAC entity instructs the physical layer to replace the data in the soft buffer for the transport block with the data attempted to be decoded. Then, the MAC entity instructs the physical layer to generate acknowledgment(s) of the data in the transport block, that is, a HARQ feedback (ACK/NACK).

HARQ processing is performed for each HARQ process to which identification information (for example, a HARQ process identifier) is assigned. In other words, in a case where a plurality of HARQ processes exists, it is possible to carry out HARQ processing in parallel. The base station device or the terminal device 50 can hold one or more HARQ processes. More specifically, the MAC entity includes a HARQ entity for each serving cell. The HARQ entity maintains a large number of parallel HARQ processes. The HARQ processing may be applied not only to a downlink but also to an uplink. In this case, the MAC entity includes HARQ entity for each serving cell for which an uplink is configured. As described above, each HARQ process is associated with a HARQ process identifier. The number of HARQ processes for a downlink may be different from or the same as the number of HARQ processes for an uplink. The HARQ entity transfers, for example, HARQ information and an associated TB to the corresponding HARQ process.

The base station device in the following description may be implemented regardless of whether the base station device is the base station 20 operating as a communication device such as a satellite station, a drone, a balloon, or an airplane, or the base station 30. The base station 30 terminal device. Further, while description will be provided with specific values to indicate specific examples in the following description, the values are not limited to the examples, and other values may be used.

Further, in the following description, the resource represents a frequency, time, a resource element (including REG, CCE, CORESET), a resource block, a bandwidth part, a component carrier, a symbol, a sub-symbol, a slot, a mini-slot, a subslot, a subframe, a frame, a PRACH occasion, an occasion, a code, a multi-access physical resource, a multi-access signature, subcarrier spacing (Numerology), or the like. Further, the HARQ process identifier in the following description may be read as a HARQ process number.

### <2-7. Outline of embodiment>

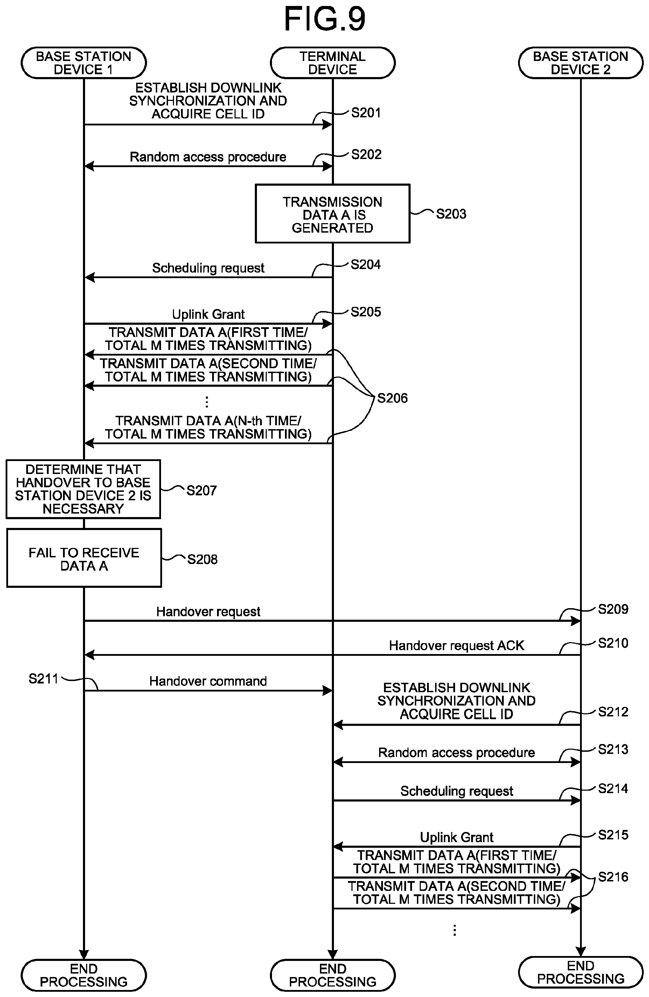

Here, a case where handover occurs during data transmission from the terminal device to the base station device will be described using FIG. 9. FIG. 9 is a sequence diagram illustrating processing of the terminal device 50 and the base station device before and after handover that occurs during data transmission.

As illustrated in FIG. 9, first, a base station device 1 establishes downlink synchronization with the terminal device, and then transmits a cell ID of a cell at the base station device 1 to the terminal device (step S201).

Next, random access procedure is performed between the base station device 1 and the terminal device (step S202).

Next, it is assumed that transmission data A is generated at the terminal device (step S203). In such a case, the terminal device transmits a scheduling request to the base station device 1 (step S204).

The base station device 1 then transmits an uplink grant to the terminal device (step S205).

Next, the terminal device repeatedly transmits the same data A to the base station device 1 on the basis of the received uplink grant (step S206). Here, the maximum number of times of transmission in repeated transmission performed by the terminal device is determined as M times in advance, and when the first to the N-th times of transmission among the M times are completed in step S206, N pieces of data A are synthesized at the base station device 1. Here, M ≥ 1.

Next, it is assumed that the base station device 1 determines that handover to a base station device 2 is necessary (step S207). Further, it is assumed that the base station device 1 fails to receive the data A (step S208).

The base station device 1 then transmits a handover request to the base station device 2 (step S209).

Then, the base station device 2 transmits an ACK for the handover request to the base station device 1 (step S210).

Then, the base station device 1 transmits an instruction of handover to the base station device 2, to the terminal device (step S211). As a result, the terminal device switches a connection destination from the base station device 1 to the base station device 2 in accordance with the instruction of handover.

Next, a base station device 2 establishes downlink synchronization with the terminal device, and then transmits a cell ID of a cell at the base station device 2 to the terminal device (step S212).

Next, random access procedure is performed between the base station device 2 and the terminal device (step S213).

The terminal device then transmits a scheduling request to the base station device 2 (step S214).

The base station device 2 then transmits an uplink grant to the terminal device (step S215).

Next, the terminal device repeatedly transmits the same data A to the base station device 2 on the basis of the received uplink grant (step S216). Here, the maximum number of times of transmission in repeated transmission performed by the terminal device is determined as M times in advance.

For example, a non-terrestrial station such as a medium-earth orbit satellite, a low-earth orbit satellite, and an HAPS appears to move at high speed over the ground when viewed from the terminal device on the ground, so the cell to be formed by the non-terrestrial station on the ground also moves at high speed. In such a case, as described above, cell switching (handover) may occur during data transmission/reception, so that data transmission/reception may fail. Furthermore, it is considered that particularly a ground terminal such as an IoT terminal needs to repeatedly transmit the same data hundreds to thousands of times because a propagation distance between the non-terrestrial station and the ground terminal is long, and thus, there is a high possibility that handover will occur during transmission of the same data, which may lead to a high possibility of failure in data transmission/reception.

Thus, in the present embodiment, the number of times of repetition of data transmission/reception is reduced so that handover might not occur during data transmission.

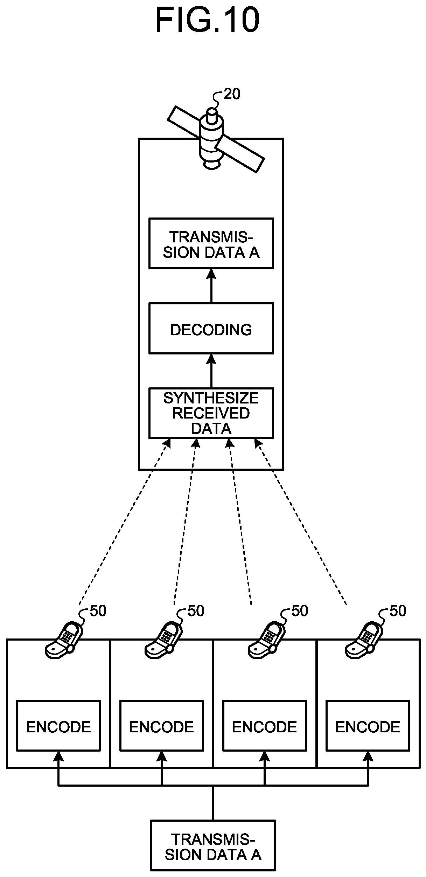

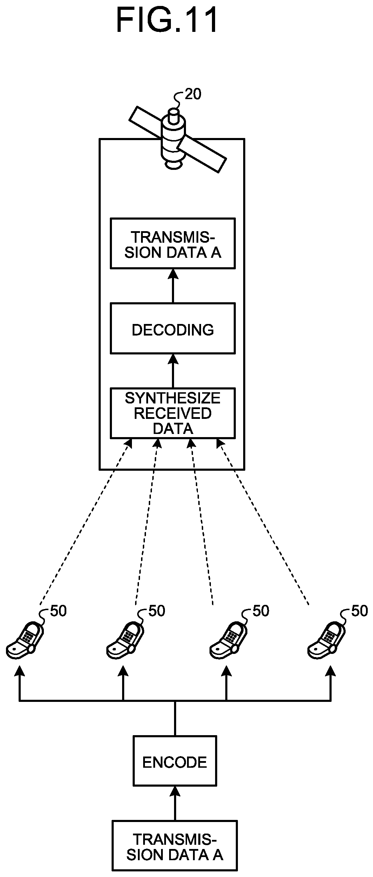

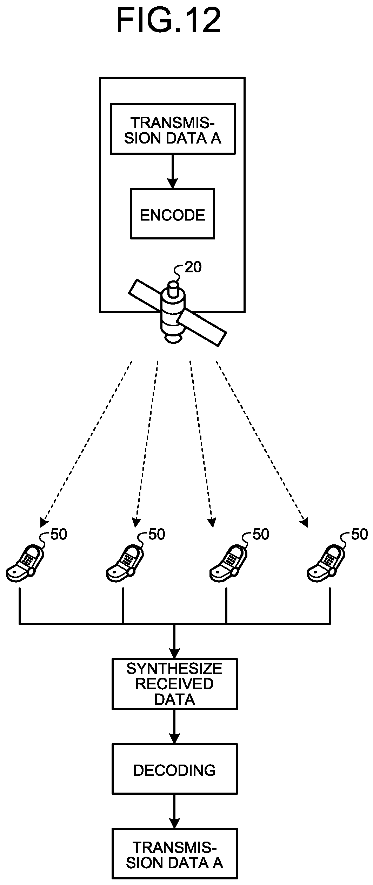

Specifically, the terminal device 50 according to the embodiment transmits or receives data in cooperation with a plurality of terminal devices 50. FIG. 10 and FIG. 11 are views illustrating a case where a plurality of terminal devices 50 cooperatively transmits data. FIG. 12 is a view illustrating a case where a plurality of terminal devices 50 cooperatively receives data. Note that while FIG. 10 to FIG. 12 illustrate a case where four terminal devices 50 cooperate with each other, the number of the terminal devices 50 that cooperate with each other may be 3 or less or 5 or more. Note that while description will be provided using an example where the base station device is the base station 20 in FIG. 10 to FIG. 12, the base station device may be the base station 30.

As illustrated in FIG. 10 and FIG. 11, the plurality of terminal devices 50 cooperatively transmits data to the base station 20. Then, the base station 20 receives signals transmitted from the respective terminal devices 50, synthesizes the signals, and then decodes the signals.

Note that as illustrated in FIG. 10, the plurality of terminal devices 50 may encode data at each terminal device 50 and transmit the data to the base station 20, or as illustrated in FIG. 11, the plurality of terminal devices 50 may receive data encoded at one of the terminal devices 50 and transmit the data to the base station 20.

Further, as illustrated in FIG. 12, the plurality of terminal devices 50 cooperatively receives the data transmitted from the base station 20. Then, the plurality of terminal devices 50 aggregates the received data at one of the terminal devices 50 through inter-terminal communication, or the like, synthesizes signals, and then decodes the signals.

By the plurality of terminal devices 50 cooperatively transmitting or receiving data in this manner, the number of times of repeated transmission at the terminal device 50 and the base station 20 can be reduced, so that failures in data transmission/reception due to occurrence of handover can be reduced.

While cooperative transmission will be described as an example below, cooperative transmission can be read as cooperative reception.

### <2-8. Determination processing of cooperative terminals>

Cooperative transmission by a plurality of terminal devices 50 can include, for example, the following cases (1) or (2).
(1) Cooperative transmission is performed after a group is formed in advance.
(2) Cooperative transmission is performed without a group being formed in advance.

(1) Cooperative transmission is performed after a group is formed in advance.
   In a case where the plurality of terminal devices 50 cooperatively transmits data, it is possible to employ a method in which a terminal group which performs cooperative transmission is determined in advance. For example, the base station device quasi-statically notifies the terminal device 50 of to which group the terminal device 50 belongs. In other words, the terminal device 50 acquires information on a group including other terminal devices 50 determined in advance, and repeatedly transmits or receives data in cooperation with the other terminal devices 50 included in the group. As the quasi-static notification, for example, system information, RRC signaling, or the like, can be used. For example, the base station device makes a notification of a terminal ID (information such as C-RNTI) of the terminal device 50 belonging to the group. Further, the base station device assigns a group ID for the group. Specifically, the base station device assigns the same group ID to the terminal devices 50 belonging to the same group. A plurality of group IDs may be assigned to one terminal device 50. In other words, the terminal device 50 acquires the identification information (group ID) for identifying the group or the identification information (terminal ID) for identifying other terminal devices included in the group as the information on the group.
(2) Cooperative transmission is performed without a group being formed in advance.

In a case where the plurality of terminal devices 50 cooperatively transmits data, it is possible to employ a method in which a terminal group which performs cooperative transmission is dynamically determined. Alternatively, coordinate transmission is performed without concept of a group.

For example, the base station device notifies the terminal device 50 of implementation of cooperative transmission using dynamic notification means such as downlink control information (DCI). Further, for example, a terminal device A notifies a terminal device B of implementation of cooperative transmission using dynamic notification means such as sidelink control information (SCI). In other words, the terminal device 50 makes a dynamic notification indicating that the terminal devices cooperatively repeatedly transmit or receive data, to other terminal devices 50.

### <2-9. Relationship between cooperative terminals>

In a case where the plurality of terminal devices 50 performs cooperative transmission, it is necessary to determine data of which terminal device 50 is to be transmitted. Such a case can include the following cases (A) or (B). Note that in the following, in relationship between a master and a slave, the terminal device 50 which becomes a master will be referred to as a "master" or a "master terminal", and the terminal device 50 which becomes a slave will be referred to as a "slave" or a "slave terminal".
(A) A case where there is relationship between a master and a slave
(B) A case where there is no relationship between a master and a slave

### (A) A case where there is relationship between a master and a slave

A case may be considered where the slave terminal transmits data of the master terminal. In this case, it is necessary to determine which terminal device 50 becomes the master and which terminal device 50 becomes the slave. For example, the base station device may notify the terminal device 50 which terminal device 50 is the master and which terminal device 50 is the slave. Specifically, the base station device transmits a request to the terminal device 50 which becomes the master and the terminal device 50 which becomes the slave. In a case where the terminal device 50 which has received the request agrees to be the master or the slave, the terminal device 50 transmits an ACK to the base station device, and in a case where the terminal device 50 does not agree to be the master or the slave, the terminal device 50 transmits a NACK to the base station device.

Note that which terminal device 50 becomes the master or the slave does not have to be notified from the base station device, and, for example, may be determined by the terminal by utilizing inter-terminal communication. For example, the terminal device 50 operates as the master in a case where the terminal device 50 cooperatively transmits data of the own terminal, and operates as the slave in a case where the terminal device 50 cooperatively transmits data of other terminal devices 50. Specifically, the terminal device 50 which becomes the master, that is, the terminal device 50 which holds data to be transmitted to the base station device transmits a request to the terminal device 50 which becomes a candidate for the slave by utilizing inter-terminal communication. In a case where the terminal device 50 that has received the request agrees to become the slave, the terminal device 50 transmits an ACK to the terminal device 50 which becomes the master, and in a case where the terminal device 50 does not agree to become the slave, the terminal device 50 transmits a NACK to the terminal device 50 which becomes the master. In other words, in a case where the terminal device 50 operates as the master, the terminal device 50 transmits a notification requesting another terminal device 50 to operate as the slave and receives a notification as to whether or not the other terminal device 50 agrees to operate as the slave. In other words, the terminal device 50 receives a notification requesting the own terminal to operate as the slave, from another terminal device 50 operating as the master, and transmits a notification indicating whether or not the own terminal agrees to operate as the slave to the other terminal device 50.

After relationship between the master and the slave is determined, the slave terminal needs to transmit data of the master terminal. In other words, the master terminal needs to transmit information regarding data to be transmitted to the slave terminal. In other words, in a case where the terminal device 50 operates as the master, the terminal device 50 transmits predetermined data to another terminal device 50 that operates as the slave, and repeatedly transmits such predetermined data.

For example, the master terminal transmits a signal indicating encoded data to the slave terminal. Then, the slave terminal amplifies power of the signal received from the master terminal or converts a frequency of the signal and transmits the signal to the base station device as is. Note that the slave terminal may transmit the signal to the base station device without amplifying power.

Further, the master terminal may transmit data to the slave terminal for each time of repeated transmission, or in order to reduce overhead, the master terminal may transmit the data to the slave terminal only once at the beginning, and the slave terminal may repeatedly transmit the data which has been received first. In a case where the master terminal transmits data to the slave terminal only once, the master terminal also transmits information on the number of times of repeated transmission. In other words, in a case where the terminal device 50 transmits predetermined data to another terminal device 50 operating as the slave, the terminal device 50 also makes the notification of the information on the number of times of repeated transmission.

Note that in a case where a plurality of slave terminals exists, the master terminal may transmit different pieces of encoded data to the respective slave terminals. In other words, in a case where the terminal device 50 operates as the master, the terminal device 50 transmits encoded data that has been subjected to different encoding processing for each of the plurality of other terminal devices 50 which operates as the slave. For example, in a case where a slave terminal A and a slave terminal B exist, the master terminal transmits a signal of data encoded with a redundancy version = 2 to the slave terminal **A,** and a signal of data encoded with the redundancy version = 3 to the slave terminal **B.** Then, the slave terminals A and B transmit the signals received from the master terminal as is by amplifying the power. In this way, as a result of the signals of the data encoded by the different redundancy versions being transmitted from different terminal devices 50, and the base station device synthesizing these received signals, it is possible to obtain a higher coding gain than a coding gain in a case where the signals are transmitted with the same redundancy version.

A value of the redundancy version is not limited to the above example. For example, in a case where there are four slave terminals, four redundancy versions = 0, 1, **2,** 3 may be assigned to the respective slave terminals, or two redundancy versions = 0, 0, **3,** 3 or three redundancy versions may be assigned.

Further, in a case where a plurality of slave terminals performs encoding with different values, the base station device needs to grasp which slave terminal encodes with which redundancy version. Means for grasping the redundancy version can include the following examples.
- The base station device assigns the redundancy version in advance.
- The master terminal selects a redundancy version for each slave terminal and notifies the base station device of the selected redundancy version using, for example, uplink control information (UCI). Note that in place of the UCI, a notification may be made by being associated with a port number of a demodulation reference signal (DMRS).

Further, in a case where the slave terminal A and the slave terminal B exist, the master terminal may divide transmission data into three pieces, allocate the divided pieces of data to the master terminal, the slave terminal A and the slave terminal B, and transmit the data. In other words, the terminal device 50 divides the predetermined data, distributes the divided pieces of data to other terminal devices 50, and performs cooperative transmission. By dividing transmission data and transmitting the transmission data from a plurality of terminals in this way, a coding rate of data to be transmitted by one terminal can be lowered. In other words, the coding gain by error correction can be obtained, so that the number of times of repeated transmission can be reduced.

The data to be divided may be encoded data. In such a case, a physical size of frequency and time resources required for transmission is reduced by the division, so that the resources can be utilized as resources for repeated transmission of the divided data.

Note that the case is not limited to a case where the slave terminal transmits the encoded data received from the master terminal as is, and the slave terminal may decode the received encoded data once, encode the data again, and transmit the data to the base station device. In such a case, for example, the master terminal notifies the slave terminal of information required for decoding and encoding processing as described below.
- Transport block size (TBS) information
- MCS information
- Information about the number of layers
- Information about precoding
- Information about a terminal ID (C-RNTI, or the like)
- Information about a redundancy version
- Information about the number of times of repeated transmission
- In addition to the above, information required for encoding, or the like, specified in TS38.211 and TS38.212

Then, the plurality of terminal devices 50 having relationship between the master and the slave releases the relationship between the master and the slave in a case where data transmission to the base station device is successful. Determination of successful reception (successful transmission) can be performed, for example, by whether the master terminal receives an ACK indicating successful reception or a NACK indicating a reception failure from the base station device. The ACK/NACK information may be notified from the master terminal to the slave terminal or may be notified from the base station device to all the terminal devices 50 of the master terminal and the slave terminal.

Further, the ACK/NACK information may be notified from the base station to the terminal device 50 by control information which makes a notification of the ACK/NACK or may be implicitly notified by a notification (grant) of resources which are to be used for new data transmission.

Further, in a case where data transmission is successful, the relationship between the master and the slave may be continued without being cancelled. For example, in a case where a release request notification for releasing the relationship is made from the master terminal to the slave terminal, the relationship between the master and the slave is cancelled, and in a case where a release request notification is not made, the relationship between the master and the slave is continued.

The release request notification may be made from the base station device to each of the master terminal and the slave terminal, may be notified from the master terminal to the slave terminal, or may be notified from the slave terminal to the master terminal. In other words, in a case where the terminal device 50 succeeds in cooperatively repeatedly transmitting or receiving predetermined data, and in a case where the terminal device 50 receives a release request notification from another device (the base station device or another terminal device 50), the relationship between the master and the slave is cancelled.

In addition, in a case where a situation occurs in which the slave terminal needs to transmit another data during data transmission, the slave terminal may suspend transmission of data of the master terminal which is being transmitted and may preferentially transmit the other data. In other words, in a case where the terminal device 50 operates as the slave, and in a case where a transmission request of another data is issued while the terminal device 50 cooperatively transmits data of another terminal device 50 that operates as the master, the terminal device 50 suspends transmission processing of the data and transmits the other data.

### (B) A case where there is no relationship between a master and a slave

Cooperative transmission may be performed in a case where there is no relationship between the master and the slave, that is, in a case where the plurality of terminal devices 50 respectively has data to be transmitted. For example, respective pieces of data of two terminal devices 50 may be combined into one piece of data, or instead of simply combining the data, the respective pieces of data may be processed at the terminal device 50, a data center, or the like, and the processed data may be used as transmission data. In such a case, the plurality of terminal devices 50 does not have to have relationship between the master and the slave, and the plurality of terminal devices 50 cooperatively transmits the same data shared through inter-terminal communication, or the like.

### <2-10. Transmission signal processing>

In a case where the plurality of terminal devices 50 performs cooperative transmission, the plurality of terminal devices 50 needs to perform transmission using transmission resources different between terminals, for example, orthogonal resources such as time resources or frequency resources or code resources, or non-orthogonal resources (such as non-orthogonal spread codes, interleaver sequences, scramble sequences and power), or the like.

In such a case, for example, the base station device makes a notification of the transmission resources allocated to each of the plurality of terminal devices 50. In other words, the terminal device 50 receives the transmission resources for transmitting the predetermined data from the base station device and performs cooperative transmission on the basis of the transmission resources. Alternatively, the base station device may allocate transmission resources to the master terminal, notify the master terminal of the allocated transmission resources, and the master terminal may divide the allocated transmission resources and allocate the transmission resources to each slave terminal. In other words, the terminal device 50 divides the transmission resources, distributes the divided resources to other terminal devices 50, and performs cooperative transmission.

Note that in a case where the master terminal divides the transmission resources, the base station device that receives the data is required to be notified of the information on the divided resources, or the like. Alternatively, the base station device needs to grasp in advance how the master terminal divides the transmission resources. For example, when the base station device notifies the master terminal of the transmission resources, the base station device also makes a notification of information regarding division of the transmission resources (information on which resources are allocated to which slave terminal).

Further, in a case where the base station device makes a predetermined notification to all the slave terminals, the base station device may make the notification with control information different for each slave terminal or may collectively make the notification of information regarding all the slave terminals with one piece of control information.

Further, in a case where sizes of transmission resources allocated are different for each slave terminal, TBS calculation results may be different between the master terminal and the slave terminal. For example, in a case where the master terminal and the slave terminal transmit the same transport block (TB), the TB will be different if the TBS is different, so that a bit sequence after error correction coding will also be different. Thus, in order to make the bit sequence after error correction coding the same, the master terminal or the base station device notifies the slave terminal of an instruction to make the TBS the same as the TBS of the master terminal in a case where cooperative transmission is performed. In other words, in a case where the terminal device 50 operates as the slave, the terminal device 50 aligns the TBS with the TBS of another terminal device 50 that operates as the master.

In a case where data is transmitted from the terminal device 50, the terminal device 50 uses an identification ID (for example, C-RNTI) assigned to the terminal device 50 to perform processing such as data scrambling and addition of a cyclic redundancy check (CRC). In the following, handling of the identification ID in a case where the plurality of terminal devices 50 performs cooperative transmission will be described. The handling of the identification ID which will be described below can be applied to processing other than data scrambling and addition of a CRC, that is, processing functions required for transmission signal processing or reception signal processing.

For example, in order to improve received power by repeated transmission, it is necessary to soft-combine the received data. In this event, in a case where the base station device, which is a receiving device, erroneously recognizes the identification ID used in generation of the transmission data, there arises a problem that soft combining cannot be performed.

For example, in a case where the terminal device A transmits data owned by the terminal device A, it is assumed that the terminal device A transmits a signal obtained by scrambling the data with the identification ID of the terminal device A. On the other hand, in a case where the terminal device B transmits data of the terminal device A, the terminal device B scrambles the data with one of the following three pieces of information. In other words, the terminal device 50 performs processing with which the identification ID of the terminal device 50, which is an owner of predetermined data, is associated, on the predetermined data.
- The identification ID of the terminal device A
- The identification ID of the terminal device B
- Information other than the identification ID

### - The identification ID of the terminal device A

In a case where the terminal device B scrambles data using the identification ID of the terminal device A, the terminal device B acquires the identification ID of the terminal device A in advance. In such a case, the terminal device B scrambles data with the identification ID of the terminal device A in a case where the terminal device B performs cooperative transmission with the terminal device A, and the terminal device B scrambles data with the identification ID of the terminal device B in a case where the terminal device B alone transmits (does not perform cooperative transmission) the data.

### - The identification ID of the terminal device B

In a case where the terminal device B scrambles data using the identification ID of the terminal device B, the terminal device B notifies in advance the base station device which is a receiving device, of which resources or a DMRS port is used to transmit the data of the terminal device A.

### - Information other than the identification ID

For example, in a case where the terminal device B scrambles the data with the above-mentioned group identification ID, the terminal device B notifies in advance all the terminal devices that performs cooperative transmission of information indicating the group identification ID. In such a case, the data is scrambled with the group ID in a case where the terminal devices of the group perform cooperative transmission, and the data is scrambled with the identification ID of the terminal device B in a case where the terminal device B performs transmission alone (does not perform cooperative transmission).

### <2-11. Data>

Examples of data to be cooperatively transmitted can include the following.
- Transmission data of the master terminal is transmitted in cooperation with the slave terminal.
- Transmission data of the master terminal is divided into a plurality of pieces and transmitted in cooperation with the slave terminal.
- Data A acquired by the terminal device A and data B acquired by the terminal device B are processed at, for example, a data center, and data C which is a processing result is cooperatively transmitted by the terminal devices A and B.
   - Transmission data of the master terminal is transmitted in cooperation with the slave terminal.

The master terminal and the slave terminal respectively transmit the same data (data of the master terminal) to the base station device by the master terminal transmitting the data owned by the master terminal to the slave terminal.
- Transmission data of the master terminal is divided into a plurality of pieces and transmitted in cooperation with the slave terminal.

For example, the master terminal divides the transmission data into three pieces of data A, B, and C, the master terminal transmits the data A, the slave terminal 1 transmits the data B, and the slave terminal 2 transmits the data C.

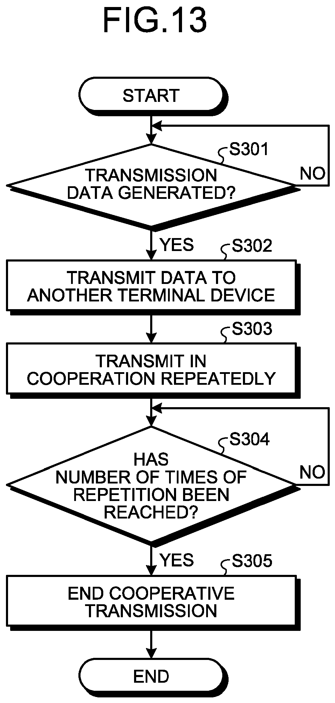

Next, procedure of processing to be executed by the terminal device 50 according to the embodiment will be described with reference to FIG. 13. FIG. 13 is a flowchart illustrating procedure of processing to be executed by the terminal device 50 according to the embodiment.

As illustrated in FIG. 13, first, the terminal device 50 determines whether or not data to be transmitted to the base station device is generated (step S301), and in a case where data to be transmitted is not generated (step S301: No), the terminal device 50 repeatedly executes the processing in step S301.

On the other hand, in a case where data to be transmitted is generated (step S301: Yes), the terminal device 50 transmits the generated data to another terminal device 50 that performs cooperative transmission (step S302). The data to be transmitted may be the same data or part of the divided data.

Subsequently, the terminal device 50 repeatedly transmits data in cooperation with other terminal devices 50 (step S303).

Subsequently, the terminal device 50 determines whether or not the number of times of repetition has been reached (step S304), and in a case where the number of times of repetition has not been reached (step S304: No), the terminal device 50 repeats the processing in step S304.

On the other hand, in a case where the number of times of repetition has been reached (step S304: Yes), the terminal device 50 ends cooperative transmission with the other terminal device 50 (step S305) and ends the processing.

### <3. Modified example>

The control device for controlling the management device 10, the base stations 20, 30, 40, or the terminal device 50 of the present embodiment may be configured as a dedicated computer system or a general-purpose computer system.

For example, a communication program for executing the above-described operation (for example, initial connection processing, HARQ processing, or the like) is stored in a computer-readable recording medium such as an optical disk, a semiconductor memory, a magnetic tape and a flexible disk and distributed. Then, for example, a control device is constituted by installing the program on a computer and executing the above-described processing. In this event, the control device may be an external device (for example, a personal computer) of the management device 10, the base stations 20, 30, 40, or the terminal device 50. Further, the control device may be an internal device of the base station 20, 30, 40 or the terminal device 50 (for example, the control unit 13, the control unit 23, or the control unit 55).

Further, the above-mentioned communication program may be stored in a disk device provided in a server device on a network such as the Internet in such a way to be downloaded to a computer. Further, the above-mentioned functions may be implemented by cooperation between an operating system (OS) and application software. In this case, other parts than OS may be stored in a medium for delivery, or other parts than OS may be stored in the server device and downloaded to a computer.

Further, among the processes described in the above-described embodiments, the entirety or a part of the processes described as being performed automatically may be manually performed, or the entirety or a part of the processes described as manually performed may be automatically performed by a known method. In addition, the processing procedures, specific terms, information including various data and parameters disclosed in the specification and drawings may be optionally changed unless otherwise specified. In one example, the various types of information illustrated in each drawing are not limited to the illustrated information.

Further, each component of each apparatus illustrated in the drawings is functionally conceptual and is not necessarily configured physically as illustrated. In other words, the specific forms of distribution or integration of each apparatus are not limited to the illustrated examples, and the entirety or a part of them may be functionally or physically distributed or integrated on an optional unit basis depending on various loads and usage conditions.

Further, an appropriate combination between the above-described embodiments is possible within the range that the details of the process do not contradict. In addition, the order of the steps illustrated in the flow charts or sequence diagrams of the above-described embodiments may be changed appropriately.

### <4. Conclusion>

As described above, according to one embodiment of the present disclosure, the terminal device 50 includes a communication unit (wireless communication unit 51) and a control unit 55. The control unit 55 transmits or receives predetermined data a predetermined number of times via the wireless communication unit 51. In addition, the control unit 55 transmits or receives predetermined data a predetermined number of times in cooperation with other terminal devices 50. This can reduce the number of times of repeated transmission or reception of data, so that it is possible to reduce failures in data transmission/reception due to occurrence of handover.

Although the above description is given of the respective embodiments of the present disclosure, the technical scope of the present disclosure is not limited to the above-described respective embodiments as they are, and various modifications may be made without departing from the scope of the present disclosure. In addition, the components in different embodiments and modifications may be combined suitably.

### Reference Signs List

1 COMMUNICATION SYSTEM
10 MANAGEMENT DEVICE
11 COMMUNICATION UNIT
12, 22, 52 STORAGE UNIT
13, 23, 55 CONTROL UNIT
20, 30, 40 BASE STATION
21, 51 WIRELESS COMMUNICATION UNIT
53 NETWORK COMMUNICATION UNIT
50 TERMINAL DEVICE
54 INPUT/OUTPUT UNIT
211 RECEPTION PROCESSOR
211a, 511a WIRELESS RECEIVER
211b, 511b DEMULTIPLEXER
211c, 511c DEMODULATOR
211d, 511d DECODER
212 TRANSMISSION PROCESSOR
212a, 512a ENCODER
212b, 512b MODULATOR
212c, 512c MULTIPLEXER
212d, 512d WIRELESS TRANSMITTER
213, 513 ANTENNA
521, 522, 523 STORAGE AREA
521a, 522a, 523a HARQ buffer
ABP1 AIRBORNE PLATFORM
C2 CELL
CN CORE NETWORK
D1 RADIUS
PN PUBLIC NETWORK
R1 ANGLE
RAN RADIO ACCESS NETWORK
SBP1, SBP2 SPACE-BORNE PLATFORM
TN1, TN2 TERRESTRIAL NETWORK

## Claims

1. A terminal device (50), comprising:
a communication unit (51); and
a control unit (55) configured to transmit or receive predetermined data a predetermined number of times via the communication unit (51) to or from a base station (20),
wherein the control unit (55) is further configured to transmit or receive said predetermined data a predetermined number of times in cooperation with another terminal device,
**characterized in that**
the control unit is further configured to:
receive a transmission resource for transmitting the predetermined data from the base station device (20),
divide the transmission resource,
distribute the divided resource to the other terminal device, and
perform cooperative transmission based on the divided transmission resource.

2. The terminal device according to claim 1,
wherein the control unit (55) is configured to acquire information on a group including the other terminal device determined in advance and transmit or receive the predetermined data a predetermined number of times in cooperation with the other terminal device included in the group.

3. The terminal device according to claim 2, wherein the control unit (55) is configured to acquire identification information for identifying the group or identification information for identifying the other terminal device included in the group as the information on the group.

4. The terminal device according to any one of claims 1 to 3,
wherein the control unit (55) is configured to make a dynamic notification indicating that the terminal device (50) cooperatively transmits or receives the predetermined data the predetermined number of times, to the other terminal device.

5. The terminal device according to any one of claims 1 to 4,
wherein the control unit (55) is configured to operate as a master in a case where the terminal device (50) cooperatively transmits data of the terminal device (50) and operate as a slave in a case where the terminal device (50) cooperatively transmits data of the other terminal device.

6. The terminal device according to claim 5, wherein the control unit (55) is configured to transmit a notification for requesting the other terminal device to operate as a slave in a case where the terminal device (50) operates as the master and receive a notification as to whether or not the other terminal device agrees to operate as the slave.

7. The terminal device according to claim 6,
wherein in a case where the terminal device (50) operates as the master, the control unit (55) is configured to transmit the predetermined data to the other terminal device that operates as the slave and transmit the predetermined data a predetermined number of times.

8. The terminal device according to claim 7, wherein in a case where the terminal device (50) transmits the predetermined data to the other terminal device that operates as the slave, the control unit (55) is further configured to make a notification of information on the predetermined number of times.

9. The terminal device according to claim 7 or 8,
wherein in a case where the terminal device (50) operates as the master, the control unit (55) is configured to transmit data subjected to different encoding processing for each of a plurality of other terminal devices that operate as the slave.

10. The terminal device according to any one of claims 7 to 9,
wherein in a case where processing of cooperatively transmitting or receiving the predetermined data the predetermined number of times is successful, and in a case where a release request notification is received from other devices, the control unit (55) is configured to cancel relationship between the master and the slave.

11. The terminal device according to any one of claims 7 to 10,
wherein the control unit (55) is further configured to receive a notification for requesting the terminal device (50) to operate as the slave from the other terminal device that operates as the master and transmit a notification as to whether or not the terminal device (50) agrees to operate as the slave to the other terminal device.

12. The terminal device according to any one of claims 7 to 11,
wherein in a case where the terminal device (50) operates as the slave, and in a case where a request for transmitting another data while the terminal device (50) cooperatively transmits data of the other terminal device that operates as the master, the control unit (55) is configured to suspend transmission processing of the data and transmit the other data.

13. The terminal device according to any one of claims 7 to 12,
wherein in a case where the terminal device (50) operates as the slave, the control unit (55) is configured to align a transport block size (TBS) with a TBS of the other terminal device that operates as the master.

14. The terminal device according to any one of claims 1 to 13,
wherein the control unit (55) is configured to divide the predetermined data, distribute the divided data to the other terminal device and perform cooperative transmission, and/or wherein the control unit (55) is configured to perform processing with which an identification ID of a terminal device, which is an owner of the predetermined data, is associated, on the predetermined data.

15. A control method to be executed by a terminal device (50), the control method comprising:
transmitting or receiving predetermined data a predetermined number of times via a communication unit to or from a base station (20); and
transmitting or receiving the predetermined data a predetermined number of times in cooperation with another terminal device
**characterized by**
receiving a transmission resource for transmitting the predetermined data from the base station device (20),
dividing the transmission resource,
distributing the divided resource to the other terminal device, and
performing cooperative transmission based on the divided transmission resource.

## Patentansprüche

1. Endgerät (50), umfassend:
eine Kommunikationseinheit (51); und
eine Steuereinheit (55), die konfiguriert ist, um vorbestimmte Daten eine vorbestimmte Anzahl von Malen über die Kommunikationseinheit (51) an eine Basisstation (20) zu übermitteln oder von dieser zu empfangen,
wobei die Steuereinheit (55) ferner konfiguriert ist, um die vorbestimmten Daten in Zusammenarbeit mit einem anderen Endgerät eine vorbestimmte Anzahl von Malen zu übermitteln oder zu empfangen,
**dadurch gekennzeichnet, dass**
die Steuereinheit ferner konfiguriert ist zum:
Empfangen einer Übermittlungsressource zum Übermitteln der vorbestimmten Daten von der Basisstationsvorrichtung (20),
Aufteilen der Übermittlungsressource,
Verteilen der aufgeteilte Ressource an das andere Endgerät, und
Durchführen einer kooperativen Übermittlung basierend auf der aufgeteilten Übermittlungsressource.

2. Endgerät nach Anspruch 1,
wobei die Steuereinheit (55) konfiguriert ist, um Informationen über eine Gruppe zu erfassen, die das andere Endgerät einschließt, das im Voraus bestimmt wurde, und um die vorbestimmten Daten in Zusammenarbeit mit dem anderen Endgerät, das in der Gruppe eingeschlossen ist, eine vorbestimmte Anzahl von Malen zu übermitteln oder zu empfangen.

3. Endgerät nach Anspruch 2, wobei die Steuereinheit (55) konfiguriert ist, um Identifikationsinformationen zum Identifizieren der Gruppe oder Identifikationsinformationen zum Identifizieren des anderen Endgeräts, das in der Gruppe eingeschlossen ist, als die Informationen über die Gruppe zu erfassen.

4. Endgerät nach einem der Ansprüche 1 bis 3,
wobei die Steuereinheit (55) konfiguriert ist, um eine dynamische Benachrichtigung an das andere Endgerät zu senden, die angibt, dass das Endgerät (50) die vorbestimmten Daten die vorbestimmte Anzahl von Malen kooperativ übermittelt oder empfängt.

5. Endgerät nach einem der Ansprüche 1 bis 4,
wobei die Steuereinheit (55) konfiguriert ist, um als ein Master in Betrieb zu sein, wenn das Endgerät (50) Daten des Endgeräts (50) kooperativ übermittelt, und um als ein Slave in Betrieb zu sein, wenn das Endgerät (50) Daten des anderen Endgeräts kooperativ übermittelt.

6. Endgerät nach Anspruch 5, wobei die Steuereinheit (55) konfiguriert ist, um eine Benachrichtigung zu übermitteln, zum Auffordern des anderen Endgeräts, als ein Slave in Betrieb zu sein, wenn das Endgerät (50) als der Master in Betrieb ist, und um eine Benachrichtigung zu empfangen, ob das andere Endgerät bereit ist, als der Slave in Betrieb zu sein oder nicht.

7. Endgerät nach Anspruch 6,
wobei, wenn das Endgerät (50) als der Master in Betrieb ist, die Steuereinheit (55) konfiguriert ist, um die vorbestimmten Daten an das andere Endgerät zu übermitteln, das als der Slave in Betrieb ist, und um die vorbestimmten Daten eine vorbestimmte Anzahl von Malen zu übermitteln.

8. Endgerät nach Anspruch 7, wobei, wenn das Endgerät (50) die vorbestimmten Daten an das andere Endgerät übermittelt, das als der Slave in Betrieb ist, die Steuereinheit (55) ferner konfiguriert ist, um eine Informationsbenachrichtigung eine vorbestimmte Anzahl von Malen zu senden.

9. Endgerät nach Anspruch 7 oder 8,
wobei, wenn das Endgerät (50) als der Master in Betrieb ist, die Steuereinheit (55) konfiguriert ist, um für jedes einer Vielzahl anderer Endgeräte, die als der Slave in Betrieb sind, Daten zu übermitteln, die einer unterschiedlichen Kodierungsverarbeitung unterzogen werden.

10. Endgerät nach einem der Ansprüche 7 bis 9,
wobei, wenn das Verarbeiten des kooperativen Übermittelns oder Empfangens der vorbestimmten Daten die vorbestimmte Anzahl von Malen erfolgreich ist, und wenn eine Freigabeaufforderungsbenachrichtigung von anderen Vorrichtungen empfangen wird, die Steuereinheit (55) konfiguriert ist, um eine Beziehung zwischen dem Master und dem Slave aufzuheben.

11. Endgerät nach einem der Ansprüche 7 bis 10,
wobei die Steuereinheit (55) ferner konfiguriert ist, um eine Benachrichtigung zum Auffordern des Endgeräts (50), als der Slave in Betrieb zu sein, von dem anderen Endgerät zu empfangen, das als der Master in Betrieb ist, und um eine Benachrichtigung darüber zu übermitteln, ob das Endgerät (50) dem Betrieb als der Slave an das andere Endgerät zustimmt oder nicht.

12. Endgerät nach einem der Ansprüche 7 bis 11,
wobei, wenn das Endgerät (50) als der Slave in Betrieb ist, und wenn eine Aufforderung zum Übermitteln anderer Daten, während das Endgerät (50) Daten des anderen Endgeräts kooperativ übermittelt, das als der Master in Betrieb ist, die Steuereinheit (55) konfiguriert ist, um die Übermittlungsverarbeitung der Daten auszusetzen und die anderen Daten zu übermitteln.

13. Endgerät nach einem der Ansprüche 7 bis 12,
wobei in einem Fall, in dem das Endgerät (50) als der Slave in Betrieb ist, die Steuereinheit (55) konfiguriert ist, um eine Transportblockgröße (TBS) an eine TBS des anderen Endgeräts anzupassen, das als der Master in Betrieb ist.

14. Endgerät nach einem der Ansprüche 1 bis 13,
wobei die Steuereinheit (55) konfiguriert ist, um die vorbestimmten Daten aufzuteilen, die aufgeteilten Daten an das andere Endgerät zu verteilen und eine kooperative Übermittlung durchzuführen, und/oder wobei die Steuereinheit (55) konfiguriert ist, um die Verarbeitung durchzuführen, bei der eine Identifikation **ID** eines Endgeräts, das ein Eigentümer der vorbestimmten Daten ist, mit den vorbestimmten Daten verknüpft wird.

15. Steuerverfahren, das durch ein Endgerät (50) ausgeführt werden soll, das Steuerverfahren umfassend:
Übermitteln oder Empfangen von vorbestimmten Daten eine vorbestimmte Anzahl von Malen über eine Kommunikationseinheit zu oder von einer Basisstation (20); und
Übermitteln oder Empfangen der vorbestimmten Daten eine vorbestimmte Anzahl von Malen in Zusammenarbeit mit einem anderen Endgerät
**gekennzeichnet durch**
Empfangen einer Übermittlungsressource zum Übermitteln der vorbestimmten Daten von der Basisstationsvorrichtung (20),
Aufteilen der Übermittlungsressource,
Verteilen der aufgeteilten Ressource an das andere Endgerät und
Durchführen der kooperativen Übermittlung basierend auf der aufgeteilten Übermittlungsressource.

## Revendications

1. Dispositif terminal (50), comprenant:
une unité de communication (51); et
une unité de commande (55) configurée pour transmettre ou recevoir des données prédéterminées un nombre prédéterminé de fois par l'intermédiaire de l'unité de communication (51) vers ou à partir d'une station de base (20),
dans lequel l'unité de commande (55) est configurée en outre pour transmettre ou recevoir lesdites données prédéterminées un nombre prédéterminé de fois en coopération avec un autre dispositif terminal,
**caractérisé en ce que**
l'unité de commande est configurée en outre pour:
recevoir une ressource de transmission pour la transmission des données prédéterminées à partir du dispositif de station de base (20),
diviser la ressource de transmission,
distribuer la ressource divisée à l'autre dispositif terminal, et
mettre en œuvre une transmission coopérative en fonction de la ressource de transmission divisée.

2. Dispositif terminal selon la revendication 1,
dans lequel l'unité de commande (55) est configurée pour acquérir des informations relatives à un groupe comportant l'autre dispositif terminal déterminé à l'avance et transmettre ou recevoir les données prédéterminées un nombre prédéterminé de fois en coopération avec l'autre dispositif terminal inclus dans le groupe.

3. Dispositif terminal selon la revendication 2, dans lequel l'unité de commande (55) est configurée pour acquérir des informations d'identification permettant d'identifier le groupe ou des informations d'identification permettant d'identifier l'autre dispositif terminal inclus dans le groupe en guise d'informations relatives au groupe.

4. Dispositif terminal selon l'une quelconque des revendications 1 à 3,
dans lequel l'unité de commande (55) est configurée pour donner une notification dynamique indiquant que le dispositif terminal (50) transmet ou reçoit coopérativement les données prédéterminées le nombre prédéterminé de fois, à l'autre dispositif terminal.

5. Dispositif terminal selon l'une quelconque des revendications 1 à 4,
dans lequel l'unité de commande (55) est configurée pour fonctionner en tant que maître dans un cas où le dispositif terminal (50) transmet coopérativement des données du dispositif terminal (50) et fonctionner en tant qu'esclave dans un cas où le dispositif terminal (50) transmet coopérativement des données à l'autre dispositif terminal.

6. Dispositif terminal selon la revendication 5, dans lequel l'unité de commande (55) est configurée pour transmettre une notification permettant de demander à l'autre dispositif terminal de fonctionner en tant qu'esclave dans un cas où le dispositif terminal (50) fonctionne en tant que maître et recevoir une notification quant à savoir si l'autre dispositif terminal accepte ou non de fonctionner en tant qu'esclave.

7. Dispositif terminal selon la revendication 6,
dans lequel dans un cas où le dispositif terminal (50) fonctionne en tant que maître, l'unité de commande (55) est configurée pour transmettre les données prédéterminées à l'autre dispositif terminal qui fonctionne en tant qu'esclave et transmettre les données prédéterminées un nombre prédéterminé de fois.

8. Dispositif terminal selon la revendication 7, dans lequel dans un cas où le dispositif terminal (50) transmet les données prédéterminées à l'autre dispositif terminal qui fonctionne en tant qu'esclave, l'unité de commande (55) est configurée en outre pour donner une notification d'informations relatives au nombre prédéterminé de fois.

9. Dispositif terminal selon la revendication 7 ou 8,
dans lequel dans un cas où le dispositif terminal (50) fonctionne en tant que maître, l'unité de commande (55) est configurée pour transmettre des données soumises à un traitement d'encodage différent pour chacun parmi une pluralité d'autres dispositifs terminaux qui fonctionnent en tant qu'esclave.

10. Dispositif terminal selon l'une quelconque des revendications 7 à 9,
dans lequel dans un cas où le traitement de transmission ou réception coopérative des données prédéterminées le nombre prédéterminé de fois est couronné de succès, et dans un cas où une notification de demande de libération est reçue d'autres dispositifs, l'unité de commande (55) est configurée pour annuler une relation entre le maître et l'esclave.

11. Dispositif terminal selon l'une quelconque des revendications 7 à 10,
dans lequel l'unité de commande (55) est configurée en outre pour recevoir une notification permettant de demander au dispositif terminal (50) de fonctionner en tant qu'esclave en provenance de l'autre dispositif terminal qui fonctionne en tant que maître et transmettre une notification quant à savoir si le dispositif terminal (50) accepte ou non de fonctionner en tant qu'esclave à l'autre dispositif terminal.

12. Dispositif terminal selon l'une quelconque des revendications 7 à 11,
dans lequel dans un cas où le dispositif terminal (50) fonctionne en tant qu'esclave, et en cas de demande pour la transmission d'autres données alors que le dispositif terminal (50) transmet coopérativement des données de l'autre dispositif terminal qui fonctionne en tant que maître, l'unité de commande (55) est configurée pour suspendre le traitement de transmission des données et transmettre les autres données.

13. Dispositif terminal selon l'une quelconque des revendications 7 à 12,
dans lequel dans un cas où le dispositif terminal (50) fonctionne en tant qu'esclave, l'unité de commande (55) est configurée pour aligner une taille de bloc de transport (TBS) avec une **TBS** de l'autre dispositif terminal qui fonctionne en tant que maître.

14. Dispositif terminal selon l'une quelconque des revendications 1 à 13,
dans lequel l'unité de commande (55) est configurée pour diviser les données prédéterminées, distribuer les données divisées à l'autre dispositif terminal et mettre en œuvre une transmission coopérative, et/ou dans lequel l'unité de commande (55) est configurée pour mettre en œuvre un traitement auquel une identification **ID** d'un dispositif terminal, qui est un propriétaire des données prédéterminées, est associée, sur les données prédéterminées.

15. Procédé de commande à exécuter par un dispositif terminal (50), le procédé de commande comprenant:
la transmission ou réception de données prédéterminées un nombre prédéterminé de fois par l'intermédiaire d'une unité de communication vers ou à partir d'une station de base (20); et
la transmission ou réception des données prédéterminées un nombre prédéterminé de fois en coopération avec un autre dispositif terminal
**caractérisé par**
la réception d'une ressource de transmission pour la transmission des données prédéterminées à partir du dispositif de station de base (20),
la division de la ressource de transmission,
la distribution de la ressource divisée à l'autre dispositif terminal, et
la mise en œuvre d'une transmission coopérative en fonction de la ressource de transmission divisée.
